# EUROPEAN PATENT SPECIFICATION

(11) **EP 2 907 222 B1**
(45) Date of publication and mention of the grant of the patent: **05.01.2022**
(21) Application number: 13771207.1
(22) Date of filing: 01.10.2013
(51) Int. Cl.: H02K 1/32, H02K 1/27, H02K 9/19, H02K 1/30

(54) **A ROTARY DEVICE, A MOTOR AND A METHOD OF COOLING A MOTOR**
GEKÜHLTE ELEKTRISCHE MASCHINE SOWIE KORRESPONDIERENDE METHODE
DISPOSITIF ROTATIF, MOTEUR ET PROCÉDÉ DE REFROIDISSEMENT DE MOTEUR

(30) Priority: 09.10.2012 GB 201218092
(43) Date of publication of application: 19.08.2015
(73) Proprietor: Integral Powertrain Ltd, Bletchley Milton Keynes MK1 1DB (GB)
(72) Inventor: BARKER, David Luke, Milton Keynes Buckinghamshire MK1 1DB (GB); CROSS, Andrew, Milton Keynes Buckinghamshire MK1 1DB (GB)
(74) Representative: Beck Greener LLP
(86) International application number: PCT/GB2013/052558
(87) International publication number: WO 2014/057245

(56) References cited:
- EP-A2- 1 168 572
- WO-A2-2012/084585
- DE-A1-102009 025 929
- GB-A- 191 416 979
- US-A1- 2010 164 310
- None

## Description

The present invention relates to a rotary device and a motor.

Electric motors are used widely as a means of generating traction. However it is known that a problem that arises with traction motors is that significant heat can be generated within them. Cooling of the motor is important so as to avoid damage to thermally sensitive components within the motor. There is a desire to provide lower cost or more performance-dense motors. However, as will be explained below, motors that satisfy this desire can experience more significant heating of the rotor within the motor in normal operation.

A motor such as a three-phase synchronous motor will typically include both a stator and a rotor. The stator is arranged, in use, to receive electrical power so as to generate a varying magnetic field. The rotor, arranged coaxially within and typically enclosed by the stator, comprises a number of permanent magnets which, under the influence of the varying magnetic field, cause the rotor to rotate. Thus, by the provision of electrical power, a rotational output can be derived. Substantially the same apparatus can be used in a reverse order to generate electricity. In other words, if the rotor is driven by a rotational drive input, voltage will be generated in the stator coils.

As the demand for reduced motor mass and physical size has increased, this has inevitably led to motors in which the stator becomes hotter in use. This is due, for example, to a reduced copper content leading to higher resistive loss in the stator windings which consequently leads to the windings themselves being hotter. In a situation where the stator in the motor runs hotter, this generally reduces the natural cooling capacity of the rotor since with the stator running hotter than the rotor, there is no potential for heat loss from the rotor to the stator. This applies in particular to sealed enclosure motors where the rotor cannot easily be air cooled. This is typical for high performance liquid-cooled motors.

In addition, demand for lower manufacturing costs favour motor architectures that can lead to increased magnetic eddy current heating of the magnets and rotors. In particular the simpler the structure of, say, the permanent magnets within the motor, the greater the generated eddy currents and consequent heating can be. Conventional methods of reducing eddy current heating of rotors have included laminating the rotor and the magnets. This ensures that significant eddy currents do not have room to generate within the magnets and rotor. However, this way to address the heating problem is of reduced benefit if the stator runs at a higher temperature, since even if the amount of heat generated due to eddy currents is reduced, due to poor or negligible heat loss from the rotor to the stator, this relatively small amount of generated heat can become a problem.

In addition, if loosing heat via the air gap to the stator is ineffective due to the high temperature of the stator, the remaining heat path for heat loss available to the rotor is via the shaft and bearings. This is typically a poor heat path which does not provide for significant heat transfer, so despite creating less heat by laminating the rotor, the rotor can still easily overheat due to the very poor heat loss mechanisms available.

To achieve a maximum power density motor at minimum cost, it is necessary to run the stator as hot as possible (high temperature stator materials are relatively inexpensive) and the rotor as cool as possible so as to keep magnet costs to a minimum.

The problem of how to effectively cool a motor has been around for some time and various solutions have been suggested.

In US-A-7,579,725 (Zhou et al) a rotor assembly cooling system is described in which a portion of a rotor shaft is hollow and includes an open end and a closed end. A coolant feed tube is rigidly attached to the rotor shaft. Thus, the shaft and the feed tube are caused to rotate at the same rate. Coolant is pumped through the feed tube until it exits the end of the feed tube and flows against the inside surface of the closed end of the rotor shaft causing the coolant to change direction and flow back through the coolant flow region. Fluid is therefore caused to flow in the space between the outer surface of the feed tube and the inner surface of the hollow rotor shaft. A continuous helical member is provided in the form of a continuous support strut which helically wraps around the feed tube and couples it to the shaft. Due to the helical shape of the member, coolant is actively pumped in the region separating the feed tube from the shaft, thus ensuring continuous coolant flow to the rotor assembly. US-A-7,489,057 is a related patent to Zhou.

In US-A-3,260,872 (Potter) an oil cooled generator is provided. Here, a flow of coolant oil is provided via an opening. The coolant oil then flows through helical paths before entering the axial shaft of the generator rotor. The fluid passes towards the end of the rotor where it is reflected from the inner surface of the rotor housing and passes back through further helical paths. Eventually, the coolant passes out of the device. Accordingly, an oil cooled generator is provided in which the helical path is used to control the flow of cooling oil and in which the fluid feed tube rotates with the rotor. Other examples of fluid-cooled motors or generators include those as described in US-A-4,647,805, US-A-5,589,720, WO-A-90/09053, DE-A-19913199, US-A-4,692,644, US-A-8,022,582, US-A-2001/0308071, US-A-3,521,094, US-A-3,060,335, US-A-3,240,967, US-A-4,350,908, US-A-5,424,593, GB-A-16979, GB-A-2483122 and DE-A-3622231.

DE102009025929 discloses a rotray assembly having an internal bush arranged on shafts of a rotor and being arranged to carry impeller blades. An outer bush is formed as a rotor base element, and comprises slots in a longitudinal direction to receive electric sheet packages. Permanent magnets are arranged between the electric sheet packages.

The invention is as defined in the claims.

There is disclosed a rotary device not belonging to the invention, comprising: a stator for receiving or outputting electrical power; a rotor arranged coaxially within the stator and having one or more magnets arranged thereon, the rotor comprising a rotor housing having an inner wall, the magnets being arranged around the housing, and wherein the rotor also comprises conduit having an axial component for the flow of a coolant between a first end of the rotor and a second distal end of the rotor; the rotor further comprising one or more radial fluid conduits, the radial fluid conduits being fluidly coupled to the axial fluid conduit and arranged in use to receive coolant from or provide coolant to the axial fluid conduit, the inner wall having one or more fluid paths for the flow of coolant, thereby to cool the rotor; and a fluid impeller arranged at the first or distal end of rotor and arranged to rotate with the rotor and impart rotary movement to or remove rotary movement from fluid entering or leaving the rotary device.

A rotary device not belonging to the invention is provided. The rotary device could function as a motor or a generator As a motor, electrical power is provided to the stator which generates a changing magnetic field and causes rotation of the rotor by interaction with the magnets thereon. In use as a generator, the rotor is driven round which generates power in the stator by virtue of the varying magnetic field to which it is exposed. An impeller is provided arranged to rotate with the rotor and impart and/or maintain rotary movement to or remove rotary movement from fluid entering or leaving the rotary device. This means that pressure losses are avoided in cooling fluid flowing through the rotary device. An axial fluid conduit is provided which enables fluid to flow in a generally axial direction, i.e. from one end of the rotor to the other and/or back again. The axial fluid conduit is preferably arranged centrally such that fluid can flow through it in a central longitudinal axial position. In another example, the axial fluid conduit or conduits are arranged at some radial distance from the central longitudinal axis of the rotor.

There is disclosed - not belonging to the invention - a rotary device, comprising: a stator for receiving or outputting electrical power; a rotor arranged coaxially within the stator and having one or more magnets arranged thereon, the rotor comprising a rotor housing having an inner wall, the magnets being arranged around the housing, and wherein the rotor also comprises an axial fluid conduit for the flow of a coolant between a first end of the rotor and a second distal end of the rotor; the rotor further comprising one or more radial fluid conduits, the radial fluid conduits being fluidly coupled to the axial fluid conduit and arranged in use to receive coolant from or provide coolant to the axial fluid conduit, the inner wall having one or more tortuous paths for the flow of coolant, thereby to cool the rotor; and a fluid impeller arranged at the first or distal end of rotor and arranged to rotate with the rotor and impart rotary movement to or remove rotary movement from fluid entering or leaving the rotary device.

A rotary device - not belonging to the invention - is provided. The rotary device could function as a motor or a generator

As a motor, electrical power is provided to the stator which generates a changing magnetic field and causes rotation of the rotor by interaction with the magnets thereon. In use as a generator, the rotor is driven round which generates power in the stator by virtue of the varying magnetic field to which it is exposed. An impeller is provided arranged to rotate with the rotor and impart and/or maintain rotary movement to or remove rotary movement from fluid entering or leaving the rotary device. This means that pressure losses are avoided in cooling fluid flowing through the rotary device. One or more tortuous paths are provided on the inner wall for the flow of coolant. These provide a means by which fluid can be made to cover a significant proportion of the surface of the inner thereby ensuring good thermal contact of the fluid with a significant part of the rotor.

The impeller is arranged to guide the fluid towards the rotor axis for removal from the motor or radially outwardly towards the one or more tortuous paths. This is particularly useful in an example in which fluid flows (in one direction of flow) from an initially central axial position, along the length of the rotor, radially outwards to flow along the tortuous paths and then is brought back in to an axial position. The impeller in this example provides a continuous conduit for the fluid whilst not allowing the fluid to flow rotationally relative to the impeller so that when the fluid is brought back to an axial position it has had removed from it its rotational movement. With fluid flowing in the opposite direction the impeller provides a means by which the fluid can be accelerated rotationally without introducing any rotational velocity relative to the rotor.

According to the invention, the impeller is a unitary moulded component having guide ribs to guide coolant.

In one example, the impeller ribs are curved.

In one example, the impeller ribs are curved with varying curvature.

In one example, the impeller ribs are straight.

In one aspect not belonging to the invention ("aspect" in the following), the impeller ribs are formed by drillings, such as cylindrical drillings..

In one example, the coolant enters and leaves the rotor at the same axial end thereof.

In one example, the coolant enters and leaves the rotor axially.

In one example, the coolant enters the rotor axially and leaves the rotor radially.

In one example, the coolant enters the rotor radially and leaves the rotor axially.

In one example, the stator has a labyrinthine path defined therein for the flow of coolant fluid.

In one example, the magnets are staggered or rotationally offset varying with axial displacement along rotor.

There is disclosed - not belonging to the invention - a motor for generating rotary power, the motor comprising: a stator for receiving electrical power; a rotor arranged coaxially within the stator and having one or more magnets arranged thereon so that in response to the stator receiving the electrical power, the rotor is caused to rotate, the rotor comprising a rotor housing having an inner wall, the magnets being arranged around the housing, and wherein the rotor also comprises a central fluid conduit for the axial flow of a coolant between a first end of the rotor and a second distal end of the rotor; the rotor further comprising one or more radial fluid conduits at the second distal end of the rotor, the conduits being fluidly coupled to the central fluid conduit and arranged in use to receive coolant from or provide coolant to the central fluid conduit, the inner wall having plural tortuous paths for the flow of coolant, thereby to cool the rotor.

In one aspect, the rotor has a cylindrical body with one or more tortuous paths arranged thereon. In other words, the inner wall is cylindrical. Upon application of power to the stator, e.g. application of a voltage to the stator, the rotor is caused to rotate. The tortuous paths guide the coolant on the surface of the cylindrical body thus ensuring good coverage of the cylindrical body by the coolant. Furthermore, radial fluid conduits are provided to guide the coolant from an axial position within the rotor to the paths on the external surface of the cylindrical body (or in the opposite direction depending on direction of fluid flow). The use of radial conduits in this way ensures that the fluid is delivered conveniently to (or received from) the paths for onward propagation. The combination of the radial conduits and the tortuous paths provides an effective and efficient way to enable cooling of the rotor to be achieved. Furthermore, the use of conduits for the fluid ensures that the fluid can be delivered to or received from, the tortuous paths without sudden changes in relative velocity between the rotor parts and the fluid, thus minimising resistance to the flow of coolant.

One further advantage of the use of radial conduits is that fluid is permitted to be transferred from the central axis to the outside cylinder close to the heat source and back again (or vice versa) with relatively low (if any) pressure loss.

In addition, the tortuous paths provided on the surface of the cylindrical body ensure that the fluid flows at relatively high velocity, i.e. higher than it would without the paths. The use of relatively high velocity fluid flow means that there is good heat transfer into the fluid. The use of tortuous paths rather than straight, narrow paths as a means to generate high velocity can be advantageous in terms of resistance to blockage and required manufacturing tolerances, although straight paths can also be used as discussed below..

Furthermore, the flow of fluid over the cylindrical surface ensures that the coolant is located close to the source of the heat (the magnets) and so heat transfer from the source is managed efficiently.

In one aspect, the tortuous paths are defined by guide ribs on or grooves in the inner wall.

In one aspect, the ribs or grooves are helical.

In one aspect, the angle of helical ribs or grooves is within a certain range.

In one aspect, the inner wall is cylindrical such that the rotor housing is hollow.

In one aspect, the motor comprises a fluid inlet and a fluid outlet, wherein the fluid outlet is at a greater radius than the fluid inlet.

In one aspect, the number of ribs or grooves is the same as the number of radial fluid conduits.

In one aspect, the number of ribs or grooves is 4.

In one aspect, the one or more radial conduits is or are formed as drillings or bores in an end cap fixedly mounted to the inner wall.

In one aspect, the central fluid conduit and the one or more radial fluid conduits are formed as a unitary component.

In one aspect, the one or more radial fluid conduits is or are curved.

In one aspect, the central fluid conduit acts as a rotor shaft and has a first end mounted in a bearing at a first end of rotor and second end mounted in a bearing at a second distal end of the rotor.

In one aspect, the hollow cylinder comprises a sealed air-filled cavity under a heat transfer zone within the motor.

In one aspect, the motor comprises a fluid impeller arranged at the first end of rotor to receive coolant from or provide coolant to the spiral ribs and guide the fluid towards the rotor axis for removal from the motor or radially outwardly towards the spiral ribs.

According to the invention, the impeller is a unitary moulded component having guide ribs to guide coolant.

In one aspect, the impeller ribs are curved.

In one aspect, the impeller ribs are curved with varying curvature.

In one aspect, the impeller ribs are straight.

In one aspect, the coolant enters and leaves the rotor at the same axial end thereof.

In one aspect, the coolant enters and leaves the rotor axially.

In one aspect, the coolant enters the rotor axially and leaves the rotor radially.

In one aspect, the coolant enters the rotor radially and leaves the rotor axially. It will be appreciated that fluid flow can be provided in any desired direction within the rotor. In one example, the fluid is provided radially and taken from the rotor after its passage through it, from the same end of the rotor. In another example, the fluid is provided axially at one end and leaves radially at the other. In another example fluid is provided radially at one end and leaves radially at the opposite end. In the example where fluid leaves from a different end from which it is input, it is typically fed directly into the tortuous paths for a single pass down the rotor before it leaves at the second end.

In one aspect, the stator has a labyrinthine path defined therein for the flow of coolant fluid.

In one aspect, the magnets are staggered or rotationally offset varying with axial displacement along rotor.

In one aspect, there is disclosed an electricity generator, comprising: a stator having electrical contacts for outputting generated power; a rotor arranged coaxially within the stator and having one or more magnets arranged thereon, the rotor having a drive input for receiving a rotary input so that in response to the rotor being driven, electrical power is generated in the stator; the rotor comprising a housing having an inner wall, the magnets being arranged around the housing, and wherein the rotor also comprises a central fluid conduit for the axial flow of a coolant between a first end of the rotor and a second distal end of the rotor; the rotor further comprising radial fluid conduits at the second distal end of the rotor, fluidly coupled to the central fluid conduit and arranged in use to receive coolant from or provide fluid to the central fluid conduit, the inner wall having plural tortuous paths for the flow of coolant, thereby to cool the rotor.

In one aspect, there is disclosed a method of cooling a rotor in a motor for generating rotary power, the method comprising: in a motor having a stator for receiving electrical power, a rotor arranged coaxially within the stator and having one or more magnets arranged thereon, providing the rotor with a cylindrical rotor housing having an inner wall, the magnets arranged around the housing, and also providing the rotor with a central fluid conduit for the flow of a coolant axially between a first input end of the rotor and a second distal end of the rotor; and providing the rotor with one or more radial fluid conduits at the second distal end of the rotor, fluidly coupled to the central fluid conduit and arranged in use to receive coolant from or provide coolant to the central fluid conduit, the inner wall having tortuous guide ribs to define plural tortuous paths for the flow of coolant, thereby to cool the rotor.

In one aspect, the method comprises providing coolant to the central fluid conduit such that the coolant is caused to flow into the radial conduits and along the tortuous paths to cool the rotor.

In one aspect, there is disclosed a motor for generating rotary power, the motor comprising: a stator for receiving electrical power; a rotor arranged coaxially within the stator and having one or more magnets arranged thereon so that in response to the stator receiving the electrical power, the rotor is caused to rotate, the rotor comprising a rotor housing having an inner wall, the magnets being arranged around the housing, and wherein the rotor also comprises a central fluid conduit for the flow of a coolant from a first input end of the rotor axially to a second distal end of the rotor; the rotor further comprising an end member arranged at the second distal end of the rotor having radial fluid conduits fluidly coupled to the central fluid conduit and arranged in use to receive coolant from the central fluid conduit, the inner wall having tortuous guide ribs to define plural tortuous paths for the flow of coolant from the second distal end to the first input end, thereby to cool the rotor.

In one aspect, the rotor has a cylindrical body with plural tortuous paths arranged thereon. Instead of tortuous paths, the fluid paths could instead be straight and axially aligned in any desired manner. What matters is that the fluid paths cover a significant proportion of the inner wall.. Upon application of power to the stator, e.g. application of a voltage to the stator, the rotor is caused to rotate. A cylindrical inner wall can be provided and the fluid paths guide the coolant on the surface of the cylindrical body thus ensuring good coverage of the cylindrical body by the coolant. It is preferred that the fluid paths cover at least 35%, of the surface of the inner wall. More preferably the fluid paths are arranged to cover a majority of the surface area of the inner wall, e.g. at least 50%, and even more preferably at least 75% of the surface area of the inner wall. One convenient way by which such surface coverage can be achieved is with the use of tortuous paths which is therefore preferred.

In one aspect, it may also be provided that, in use, the minimum flow rate of fluid within the fluid paths 50 is 0.5m/s.

Furthermore, in one aspect, radial fluid conduits are provided to guide the coolant from an axial position within the rotor to the paths on the external surface of the cylindrical body. The use of radial conduits in this way ensures that the fluid is delivered conveniently to the paths for onward propagation along the cylindrical wall. The combination of the radial conduits and the tortuous paths provides an effective and efficient way to enable cooling of the rotor to be achieved. Furthermore, the use of conduits for the fluid ensures that the fluid can be delivered to, and returned from the tortuous paths without sudden changes in relative velocity between the rotor parts and the fluid, thus minimising resistance to the flow of coolant.

One further advantage of the use of radial conduits is that fluid is permitted to be transferred from the central axis to the outside cylinder close to the heat source and back again with relatively low (if any) pressure loss.

In addition, the tortuous paths provided on the surface of the cylindrical body ensure that the fluid flows at relatively high velocity, i.e. higher than it would without the paths. The use of relatively high velocity fluid flow means that there is good heat transfer into the fluid. The use of tortuous paths rather than straight, narrow paths as a means to generate high velocity is advantageous in terms of resistance to blockage and required manufacturing tolerances.

Furthermore, the flow of fluid over the cylindrical surface ensures that the coolant is located close to the source of the heat (the magnets) and so heat transfer from the source is managed efficiently.

In one aspect, ribs are provided to define the tortuous paths. The ribs are preferably spiral. This ensures that full coverage of the cylindrical surface with coolant can be achieved, which in turn ensures that heat transfer from the rotor can be performed effectively.

In one aspect, the angle of ribs, i.e. the spiral angle with respect to the longitudinal dimension of the rotor is within a defined range so as to ensure good coverage of the rotor cylindrical wall and a fast fluid flow rate for good heat transfer.

In one aspect, a 4 start helical thread pattern is used, which, together with the width of flow passage or pitch, yields 10 degrees as a helix angle. The width and height of passage was determined by the target flow area, which in turn results from a 2m/s target velocity, consistent with good heat transfer without excessive pressure drop. In this example, a flow area of 48mm² is provided. Similar cooling performance may be achieved with 3 or 6 radial drillings and a helix angle in the range 5 to 30 degrees. Thus, it is preferred in general that the angle of helical ribs or grooves is in the range of 5 to 30 degrees.

In one aspect, the cylindrical rotor housing is hollow. This is particularly advantageous since it ensures that a rotor can be provided in the motor, wherein the rotor has low inertia and mass. This is important in terms of being able to start and stop the motor, and more generally reduces the required power to accelerate or decelerate the motor.

In one aspect, the magnets are staggered or rotationally offset varying with axial displacement along rotor. This enables an optimal response to the varying field generated by the coils within the stator and reduces the magnetic-field-induced harmonic distortion in the driving A/C waveform.

In one aspect, the number of paths or ribs is the same as the number of radial fluid conduits. This enables a one-to-one correspondence to be established between the conduits and the paths which provides for efficient passing of the coolant from the radial conduits to the paths.

In one aspect, the number of tortuous paths ribs is 4 (the number of ribs will correspond). This provides good coverage of the cylindrical surface of the rotor whilst being easy to manufacture.

In one aspect, the radial conduits are formed as drillings or bores in the end member.

This is a particularly preferred arrangement since it is easy to manufacture. It is envisaged that where the central fluid conduit connects to the end member drilling may extend into the central fluid conduit too so as to enable the fluid to leave from the cylindrical outer wall of the central fluid conduit directly into the drillings or bores within the end member.

In one aspect, the central fluid conduit and end member (including the radial fluid conduits) are formed as a unitary component. This reduces part count of the motor as a whole and ensures good connection between the central fluid conduit and end member.

In one aspect, the central fluid conduit acts as a rotor shaft and has a first end mounted in bearing at first end of rotor and second end mounted in bearing at distal end, wherein the rotor shaft extends into and is supported by the bearing.

In one aspect, the hollow cylinder comprises a sealed air-filled cavity. The air filled cavity is arranged within the rotor under the heat transfer zone. The use of an air-filled cavity minimises inertia and thereby reduces the power required to start, stop, accelerate or decelerate the motor.

In one aspect, the motor comprises a fluid impeller arranged at the first end of rotor to receive coolant from the spiral ribs and guide the fluid towards the rotor axis for removal from the motor. This is a particularly advantageous feature since the removal of whirl from the coolant as it leaves the motor means that pressure loss is avoided and so no high pressure pump is required to pump the coolant through the motor.

According to the invention, the impeller is a unitary moulded component having guide ribs to guide coolant. This enables the benefits of the impeller to be achieved with minimal additional part count. It also means that the impeller can in practice be a simple moulded component within the motor assembly.

In one aspect, the impeller ribs are curved, which provides for a smooth and gentle removal of whirl from the received coolant. In the case where the impeller is a simple moulded component the provision of appropriately shaped ribs is easy to achieve.

In one aspect, the impeller ribs are curved with varying curvature. The use of a gradually varying curvature in the ribs allows the control of the removal of whirl to be more accurately achieved.

In one aspect, the stator has a labyrinthine path defined therein for the flow of coolant fluid. This enables the stator to be kept cool as well. In one example, the coolant fluid path within the stator and the coolant fluid path within the rotor are a continuous path for fluid. This means that a single fluid cycle can be used to cool the rotor and stator of the motor, i.e. the entire motor. In one example, a coolant flow rate of 15l/min is specified to cool a motor of greater than 100kW output and overall package volume of 8 litres.

In one example, the fluid inlet to the rotor and outlet from the rotor are at different radii. In combination with the low pressure losses achievable with the use of the radial conduits, this means that the motor can effectively self-pump. This is because if the outlet is at a larger radius than the inlet, then the resultant change in radius over the entire fluid path within the motor (i.e. from inlet to outlet) is in the direction that is forced by the rotation of the rotor. In other words, the rotor itself acts as centrifugal pump which can obviate the need for an additional coolant pump.

In an aspect, there is disclosed an electricity generator, comprising: a stator having electrical contacts for outputting generated electricity; a rotor arranged coaxially within the stator and having one or more magnets arranged thereon, the rotor having a drive input for receiving a rotary input so that in response to the rotor being driven, a voltage is generated in the stator; the rotor comprising a cylindrical rotor housing having a cylindrical wall, the magnets being arranged around the housing, and wherein the rotor also comprises a central fluid conduit for the flow of a coolant from a first input end of the rotor axially to a second distal end of the rotor; the rotor further comprising an end member arranged at the second distal end of the rotor having radial fluid conduits fluidly coupled to the central fluid conduit and arranged in use to receive coolant from the central fluid conduit, the cylindrical wall having tortuous guide ribs to define plural tortuous paths for the flow of coolant from the second distal end to the first input end, thereby to cool the rotor.

As well as a motor, in one aspect there is also provided a generator. It will be appreciated that in terms of components the two are very similar. Whereas a motor is used to generate a rotary output from an electrical signal, a generator is used to generate an electrical output from a rotary input. The advantages ascribed above to the motor therefore apply also to the generator. In particular, the tortuous paths guide the coolant on the surface of the cylindrical body thus ensuring good coverage of the cylindrical body by the coolant. The radial fluid conduits are provided to guide the coolant from an axial position within the rotor to the paths on the external surface of the cylindrical body. The use of radial conduits in this way ensures that the fluid is delivered conveniently to the paths for onward propagation along the cylindrical wall. The combination of the radial conduits and the tortuous paths provides an effective and efficient way to enable cooling of the rotor to be achieved. Furthermore, the use of conduits for the fluid ensures that the fluid can be delivered to the start of the tortuous paths without significant turbulence being introduced to the fluid flow.

In one aspect, there is disclosed a method of cooling a rotor in a motor for generating rotary power, the method comprising: in a motor having a stator for receiving electrical power, a rotor arranged coaxially within the stator and having one or more magnets arranged thereon, providing the rotor with a cylindrical rotor housing having a cylindrical wall, the magnets arranged around the housing, and also providing the rotor with a central fluid conduit for the flow of a coolant from a first input end of the rotor axially to a second distal end of the rotor; and providing the rotor with an end member arranged at the second distal end of the rotor having radial fluid conduits fluidly coupled to the central fluid conduit and arranged in use to receive coolant from the central fluid conduit, the cylindrical wall having tortuous guide ribs to define plural tortuous paths for the flow of coolant from the second distal end to the first input end, thereby to cool the rotor.

In one aspect, the method comprises providing coolant to the central fluid conduit such that the coolant is caused to flow into the radial conduits and along the tortuous paths to cool the rotor.

In one aspect, there is disclosed a motor for generating rotary power, the motor comprising: a stator for receiving electrical power; a rotor arranged coaxially within the stator and having one or more magnets arranged thereon so that in response to the stator receiving the electrical, the rotor is caused to rotate, the rotor comprising a cylindrical rotor housing having a cylindrical wall, the magnets being arranged around the housing, and wherein the rotor also comprises a central fluid conduit for the flow of a coolant from a first input end of the rotor axially to a second distal end of the rotor; the rotor further comprising an end member arranged at the second distal end of the rotor having radial fluid conduits fluidly coupled to the central fluid conduit and arranged in use to receive coolant from the central fluid conduit, the cylindrical wall having plural tortuous paths for the flow of coolant from the second distal end to the first input end, thereby to cool the rotor.

In one aspect, there is disclosed a method of cooling a generator, the method comprising: in a generator having a stator and a rotor arranged coaxially within the stator having one or more magnets arranged thereon and being arranged to receive a rotary drive input, providing the rotor with a rotor housing having an inner wall, the magnets arranged around the inner wall, and also providing the rotor with a central fluid conduit for the flow of a coolant from a first input end of the rotor axially to a second distal end of the rotor; and providing the rotor with one or more radial fluid conduits at the second distal end of the rotor, fluidly coupled to the central fluid conduit and arranged in use to receive coolant from the central fluid conduit, the inner wall having tortuous guide ribs to define plural tortuous paths for the flow of coolant from the second distal end to the first input end, thereby to cool the rotor.

In one aspect, there is disclosed a rotary device, comprising: a stator for receiving or outputting electrical power; a rotor arranged coaxially within the stator and having one or more magnets arranged thereon, the rotor comprising a rotor housing having an inner wall, the magnets being arranged around the housing, and wherein the rotor also comprises a central fluid conduit for the axial flow of a coolant between a first end of the rotor and a second distal end of the rotor; the rotor further comprising one or more radial fluid conduits at the second distal end of the rotor, the conduits being fluidly coupled to the central fluid conduit and arranged in use to receive coolant from or provide coolant to the central fluid conduit, the inner wall having plural tortuous paths for the flow of coolant, thereby to cool the rotor.

In one aspect, there is disclosed a rotary device, comprising: a stator for receiving or outputting electrical power; a rotor arranged coaxially within the stator and having one or more magnets arranged thereon, the rotor comprising a rotor housing having an inner wall, the magnets being arranged around the housing, and wherein the rotor also comprises an axial fluid conduit for the flow of a coolant between a first end of the rotor and a second distal end of the rotor; the rotor further comprising one or more radial fluid conduits, the radial fluid conduits being fluidly coupled to the axial fluid conduit and arranged in use to receive coolant from or provide coolant to the axial fluid conduit, the inner wall having one or more fluid paths for the flow of coolant, thereby to cool the rotor, the fluid paths having internal surfaces that are in use, wetted by the flow of cooling fluid thereby defining a wetted surface area, wherein the total wetted surface area is at least 35% of the inner surface area of the magnets.

In one aspect, the total wetted surface area is at least 50% of the surface area of the magnets. Preferably, the total wetted surface area is at least 75% of the surface area of the magnets. More preferably, the total wetted surface area is at least 100% of the surface area of the magnets and most preferably, the total wetted surface area is greater than 100%, e.g. at least 125% or 150%, of the inner surface area 51 of the magnets.

In one aspect, there is provided a fluid impeller arranged at the first or distal end of rotor and arranged to rotate with the rotor and impart rotary movement to or remove rotary movement from fluid entering or leaving the rotary device.

Embodiments of the present invention and aspects will now be described in detail with reference to the accompanying drawings, in which:
Figure 1 is a schematic representation of a traction motor as fitted onto the engine of a typical hybrid or electric vehicle;
Figure 2 is a schematic representation of a traction moor as might be provided in the system of Figure 1;
Figure 3 is a perspective cross section through the motor as might be provided in the motor assembly of Figure 2;
Figure 4 is a longitudinal cross section through the motor assembly of Figure 2;
Figure 5 is a partial vertical cross section through the motor assembly of Figure 2;
Figure 6 is a perspective longitudinal cross section through a rotor assembly;
Figure 7 is a schematic representation of a rotor from an assembly such as that shown in Figures 3 to 6;
Figure 8 is a schematic representation of a bearing journal for the rotor of Figure 7;
Figure 9 is a schematic representation of the helical rotor coolant component for use in a rotor assembly;
Figure 10 is a schematic representation of a coolant impeller for use in a motor assembly;
Figure 11 is a schematic representation of a rear end plug for use in a motor assembly;
Figure 12 is a schematic representation of a tube for connecting to the plug of Figure 11 for use in a motor assembly;
Figure 13 is a schematic representation of a plug for use in a motor assembly;
Figure 14 is a schematic representation of a longitudinal cross section through the rotor of a motor assembly;
Figure 15 is a longitudinal cross section through a schematic representation of a rotor for a motor assembly;
Figure 16 shows a schematic representation of one example of an inlet tube seal;
Figure 17 is a schematic representation of an aspect of a rotor for use in a motor or rotary device;
Figure 18 is a schematic representation of an aspect of a close-up of a section of the rotor of Figure 17, including four co-axial feed ports;
Figure 19 - directed to an aspect - is a schematic representation of a section through the rotor of Figure 17 showing four radial return ports at a shaft exit;
Figure 20 - directed to an aspect - is a schematic representation of an end portion of the rotor of Figure 17 including an inlet feed impeller device;
Figure 21 - directed to an aspect - is a schematic representation of a section through four return ports from a surface helix on a rotor such as that shown in Figure 17;
Figure 22 - directed to an aspect - is a schematic representation of a section through four radial feed ports providing a liquid feed to the surface helix of the rotor of Figure 17;
Figure 23 - directed to an aspect - is a schematic representation showing a section through two of four co-axia feed ports, by which liquid is fed to the surface helix of a rotor such as that shown in Figure 17;
Figure 24 - directed to an aspect - is a schematic representation of an impeller and coupling spigot for a rotor such as that shown in Figure 17;
Figure 25 - directed to an aspect - is a section showing the coolant path from an impeller to the shaft co-axia ports for a rotor such as that shown in Figure 17;
Figure 26 - directed to an aspect - shows a section through the co-axial return conduits from the surface helix on a rotor such as that of Figure 17;
Figure 27 - directed to an aspect - is a schematic representation of the front view showing the inlet holes which feed tangentially into impeller blades on a rotor such as that shown in Figure 17;
Figure 28 - directed to an aspect - is a section through one of the four inlet holes feeding tangentially into the impeller of Figure 27;
Figure 29 - directed to an aspect - is a schematic representation of an alternative example of a rotor for use in a motor;
Figure 30 - directed to an aspect - is a schematic representation of a section through the rotor of Figure 29
Figure 31 - directed to an aspect - is a view of a section through the ports from a surface helix to an outer co-axial annulus of the rotor of Figure 29;
Figure 32 - directed to an aspect - is a schematic representation of a section through return ports from a surface helix to the outer co-axial annulus of the rotor;
Figure 33 - directed to an aspect - is a view of a section through a coolant inlet-outlet manifold
Figure 34 - directed to an aspect - is a schematic representation of a section through a shaft assembly including the inlet-outlet manifold;
Figure 35 - directed to an aspect - is a section through the radial coolant inlet conduits to the surface helix on the rotor of Figure 29;
Figure 36 - directed to an aspect - is a section through the radial coolant return conduits from the surface helix on the rotor of Figure 29;
Figure 37 - directed to an aspect - is a schematic representation of a section through the shaft assembly showing coolant inlets and outlets for the rotor of Figure 29.

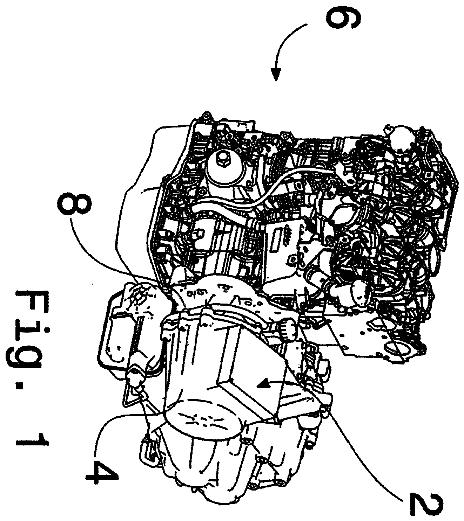

Figure 1 is a view of a traction motor 2 installed on an engine 6. The traction motor 2 is arranged within a housing 4 coupled to the engine 6. Further description of the engine 6 will not be provided. It will be understood that any appropriate type of engine may be used. The housing 4 of the motor 2 is coupled to the engine 6 using connectors 8 such as bolts or rivets although the particular type of connector used is not important. The engine 6 can produce a power output either by the combustion of an appropriate fuel or by the output of the electric motor 2. Such hybrid power supply systems are known and further description will not be provided thereof. Such a power supply system is as might be provided in a "hybrid vehicle", i.e. a vehicle powered by a power system capable of providing power either from a combustion engine or from an electric motor.

Whereas a motor is used to generate a rotary output from an electrical signal, a generator is used to generate an electrical output from a rotary input. The description herein will be predominantly with respect to use of the device as a motor for generating rotary power, although it could be used instead as a generator of electrical power from a rotary power input. Thus, the term "rotary device" is used to cover both generators and motors.

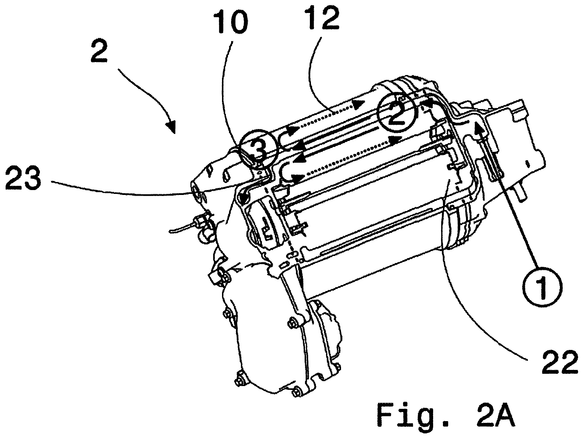

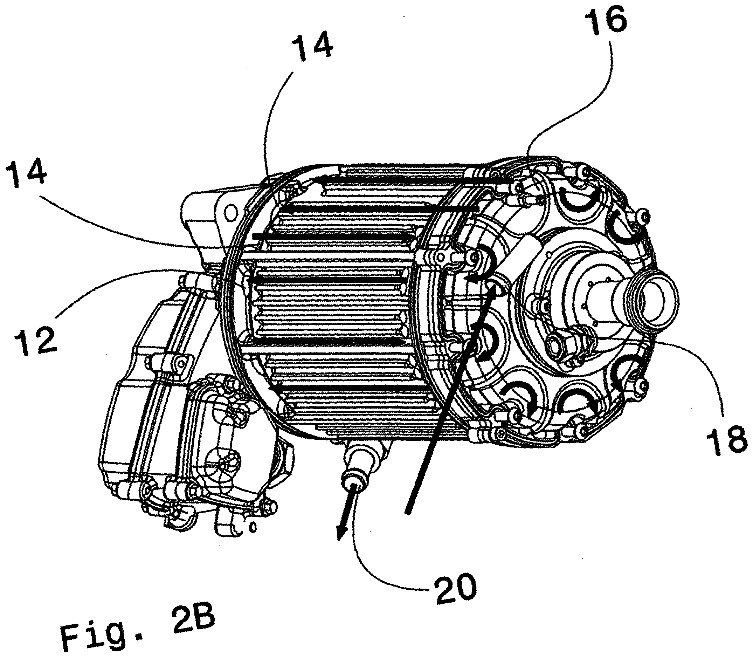

Figure 2 shows a schematic representation of a motor (a traction motor) as might be provided in the system or engine of Figure 1.

The motor 2 has an outer casing 10 that would be in use arranged within the housing 4 shown in Figure 1. The basic structure of the motor and housing is that of a three phase synchronous motor comprising an outer stator including windings together with a coaxially mounted rotor including permanent magnets. In use, an AC power signal is provided to the windings such as to generate a rotating magnetic field which causes corresponding rotation of the rotor within the stator. In some examples this AC power source may be derived from a DC battery or cell assembly with the use of an interconnected inverter.

Figures 2A and 2B show views of the stator 22, with all or part of the inner casing 10 removed. The rotor can of course not be seen in these figures since it is enclosed by the stator. As can be seen, a labyrinthine path 12 is provided within the stator 22. The labyrinthine path 12 includes longitudinal path sections 14 together with turning portions 16 arranged generally at the axial ends of the stator. An inlet 18 is provided through which a coolant is caused to flow. An appropriate pump, such as an electric motor driven centrifugal pump may be used to drive coolant through the motor assembly. The fluid enters via the inlet 18 and passes up or down along each of the channels 14 along the labyrinthine path 12, changing direction in the turning portions 16, such as to cover substantially all of the external cylindrical surface of the stator 22 with coolant. Thus, a significant amount of heat transfer from the stator is enabled by the use of such a labyrinthine heat transfer fluid path.

As seen in Figure 2A a branching point 23 is provided at which the coolant flowing through the stator either continues on its path through the stator or splits and continues into the rotor as will now be explained in detail. The relative proportion of coolant that flows in each of the rotor and the stator can be controlled by a controllable valve or is determined by the relative dimensions of the various flow paths and conduits.

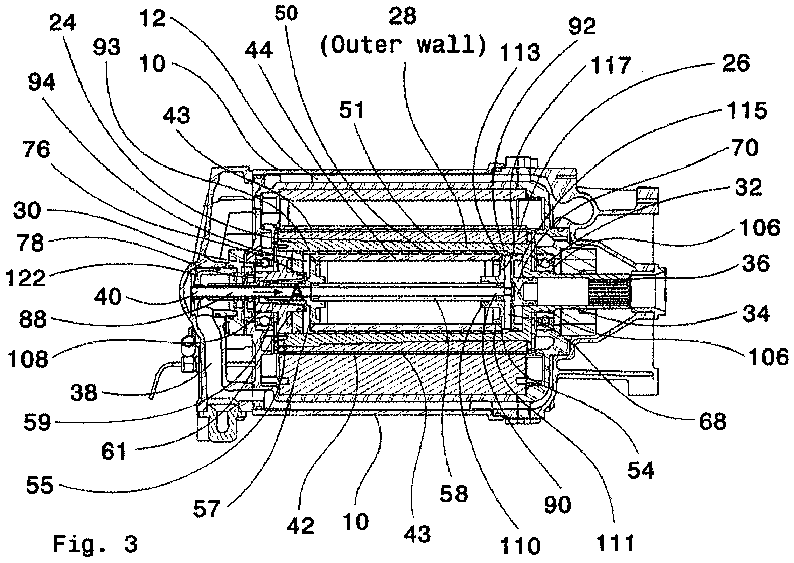

Once the heat transfer fluid has passed along the entire length of the labyrinthine path 12, and indeed further motor cooling paths, it exits via exit opening 20. The rotor cooling phase of its passage through the motor assembly will now be described with reference to Figure 3.

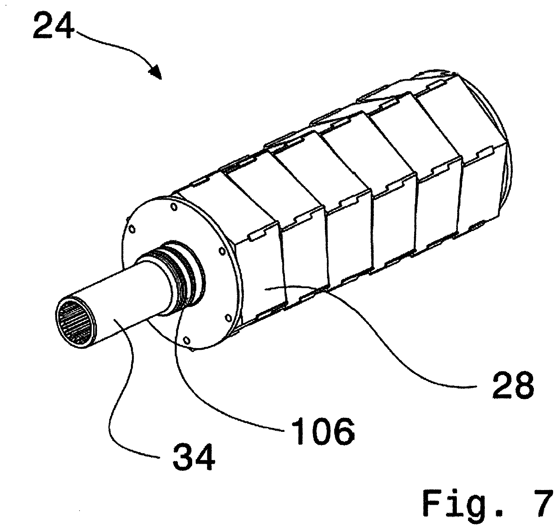

Figure 3 is a longitudinal cross section through the motor assembly of Figure 2. The motor assembly includes a stator 22 which typically comprises windings (not shown). The stator 22 is arranged within the casing 10 of the motor assembly. Arranged within the motor assembly 2 is a rotor designated generally at 24. The rotor will be described in greater detail below. As can be seen, the rotor comprises magnets 26 arranged around a rotor housing 28. The magnets are preferably permanent magnets which include materials such as dysprosium. The rotor 24 is arranged to rotate due to the interaction of the magnets 28 with the powered windings 22. Bearings 30 and 32 are provided to support rotation of the rotor 24 within the motor assembly. The magnets are angularly displaced with respect to each other along the length of the rotor housing 24, as will be explained in greater detail below with reference to Figure 7.

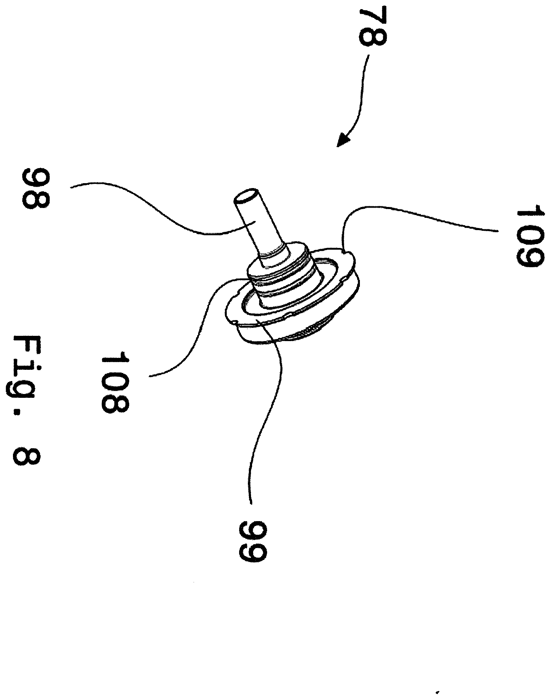

The rotor housing 24 has a central shaft of rotation 34. At one end thereof, referred to herein as the "second end", splines 36 are provided to enable rotational coupling between the rotor 24 and an output shaft (not shown). Thus, as the rotor 24 is driven due to the varying AC power signal provided to the stator 22, a rotational output can be taken from the motor assembly 2 via the shaft 34 and splines 36. At the other end of the rotor, the "first end", a bearing journal 78 is provided for supporting the rotation of the rotor 24. The bearing journal 78 couples fixedly to the rotor housing 28. The bearing journal 78 is described in greater detail below with particular reference to Figure 8.

In Figure 3, the labyrinthine path 12 of the stator can be seen. A connecting region of the path (not shown) is arranged to provide a route from the labyrinthine path 12 to the inlet to the feed tube of the rotor, as mentioned above with reference to Figure 2A. Furthermore, an outlet 38 is provided through which coolant is routed as it leaves the rotor and connects to the output 20 seen in Figure 2B.

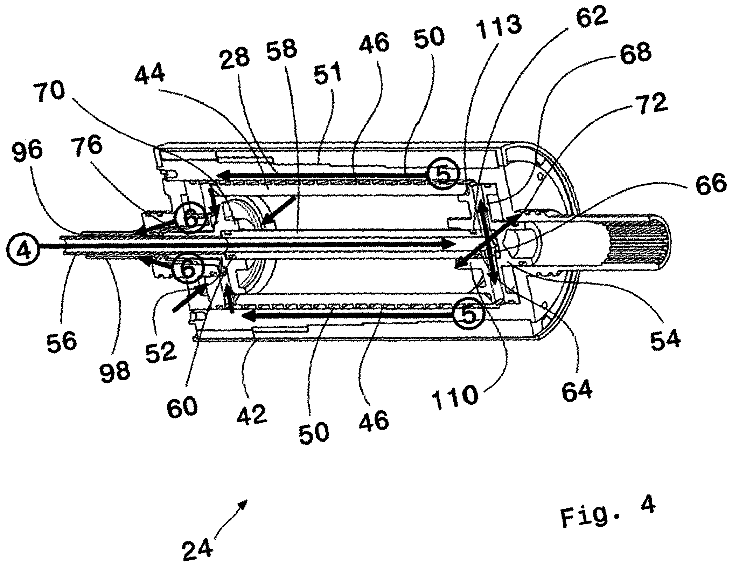

Before describing in greater detail the arrangement of the rotor within the motor assembly, reference is made to Figures 4 and 7 to 13 which show the rotor in isolation together with a number of its individual components. As shown primarily in Figure 4, the rotor 24 comprises an outer wrap 42. When arranged within the motor, an air gap 43 (see Figure 3) is provided between the outer wrap 42 of the rotor 24 and an inner cylindrical surface of the stator 22. Due to the cooling mechanisms provided and described herein heat transfer from the rotor to the stator via this air gap is not required.

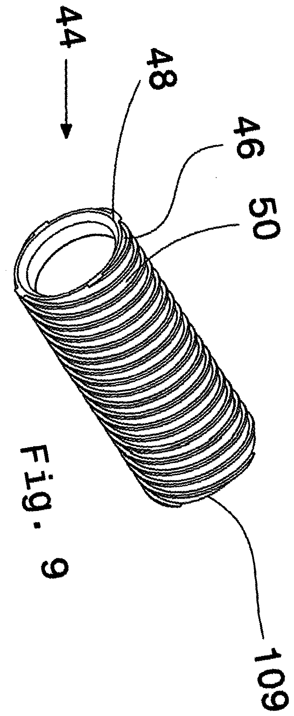

The rotor 24 comprises an inner wall 44, which in part defines, in this example a cylinder of circular cross-section. Thus, the inner wall 44 may be referred to as a cylindrical housing. This is shown in isolation in Figure 9. It is preferred that the inner wall housing is cylindrical but other shaped housings can also be used. In this example, the inner cylindrical housing 44 comprises plural external helical ribs 46 which terminate at the ends of the rotor at rib ends 48. The ribs 46 define discrete tortuous channels (in this case helical channels) or fluid paths 50 around the outer cylindrical surface of the inner cylindrical housing 44, defined in part also by the inner cylindrical surface of the rotor housing 28. In the example shown in Figure 9, four helical ribs 46 are provided, thereby defining four discrete tortuous paths 50 therebetween.

As mentioned above, in an aspect, instead of tortuous paths, the fluid paths 50 could instead be straight and axially aligned. What matters is that the fluid paths cover a significant proportion of the surface of the inner wall to ensure good thermal engagement therewith and with the magnets which they are arranged primarily to cool. Upon application of power to the stator, e.g. application of a voltage to the stator, the rotor is caused to rotate. A cylindrical inner wall can be provided and the fluid paths guide the coolant on the surface of the cylindrical body thus ensuring good coverage of the cylindrical body by the coolant. Whatever their configuration, e.g. straight, helical, tortuous etc, it is preferred that the fluid paths cover at least 35% of the surface of the inner wall. More preferably the fluid paths are arranged to cover at least 50% and even more preferably at least 75% of the surface are of the inner wall. One convenient way by which such surface coverage can be achieved is with the use of helical paths which is therefore preferred. It may also be provided that, in use, in any of the embodiments or examples described, the minimum flow rate of fluid within the fluid paths 50 is 0.5m/s. In an alternative the minimum flow rate is set at 1.0m/s or 2m/s.

The inner wall 44 forms part of the rotor housing which is preferably hollow (whatever its cross-section) as shown in Figure 4 so as to provide a rotor with low mass and inertia. This reduces the power needed to accelerate or decelerate the rotor. Any desired number of tortuous channels could be provided. In one example there are four provided, whereas in another only a single tortuous channel is provided. The tortuous paths are shown in the example as being helical in shape. However it will be appreciated that other shapes may be used. For example it could be that the paths flow up and down the rotor similar to the flow paths of fluid in the stator as shown in and described with reference to Figure 2B.

Instead of (or as well as) providing ribs in the manner shown, in another example the surface of the inner cylindrical housing is planar with grooves formed in it so as to define the discrete paths for coolant. In both cases, ribs and/or grooves, tortuous paths are provided for the flow of coolant on the surface of the rotor housing. The grooves could be formed by etching or milling the surface of the inner cylindrical housing 44. The cross sectional area of each of the tortuous paths will depend on each specific application although it is preferred that a range of 20 to 60mm² will be used.

Instead of (or as well as) providing fluid paths 50 in the manner shown on the inner wall 44, ribs or grooves may be formed on the cylindrical inner surface of rotor housing 28, so as to again define tortuous paths 50 on an inner wall of the rotor. It should be borne in mind that, in use, with the rotor rotating, the channels or paths 50 rotate together with other components of the rotor, e.g. the magnets. It is clearly possible to provide the tortuous paths as an integrated part of the component 44, as part of the rotor housing 28, or indeed as a combination of the two. Furthermore, additional components could be provided, such as a cylindrical shell to surround and enclose (from the outside) the inner wall 44 or (from the inside) paths formed in the rotor housing 28. What matters is that one or more tortuous paths are provided on or associated with an inner wall of the rotor.

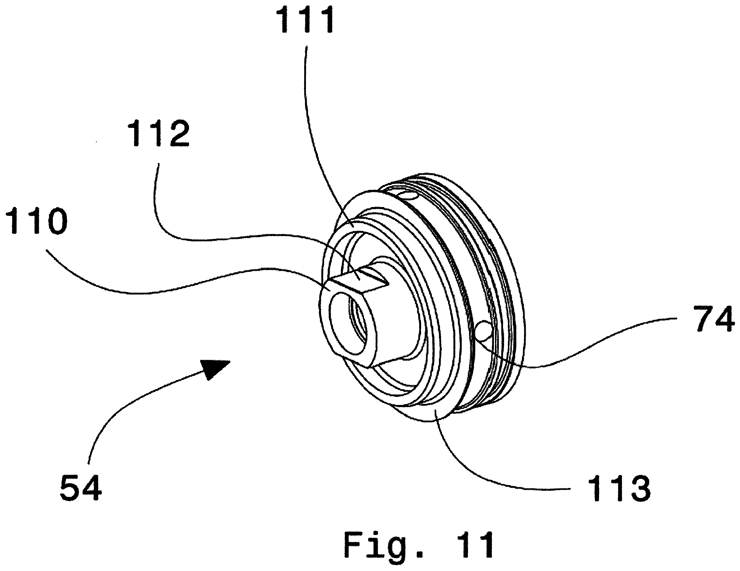

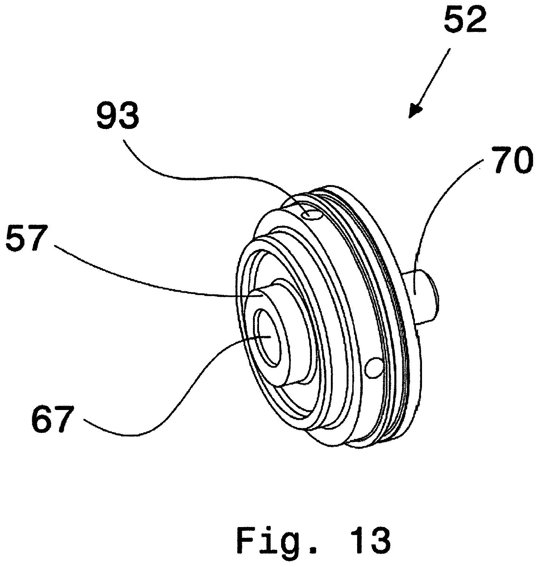

The rotor also comprises caps or end members 52 and 54 at opposite axial ends of the inner wall or cylindrical housing 44. The plugs are fixedly engaged with the inner wall 44 such that the caps and inner wall 44 rotate together. The plugs 52 and 54 are shown removed from the inner wall or cylindrical housing 44 in Figures 11 and 13, respectively.

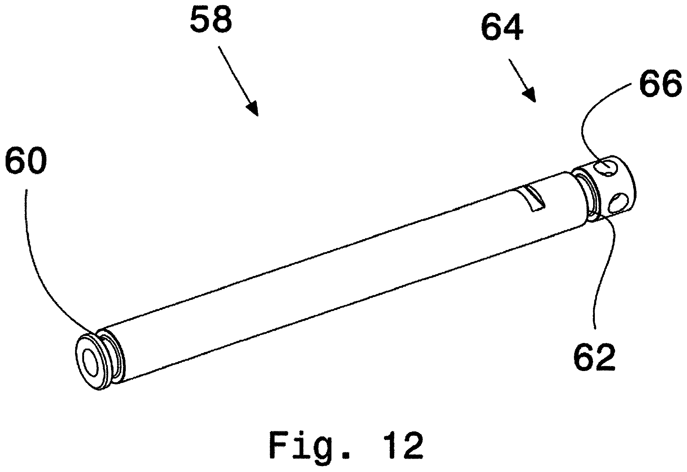

The rotor 24 has an inlet tube 56 through which coolant enters the rotor. The inlet tube 56 is fixedly and rotationally coupled to the plugs 52 and 54. Therefore, as the rotor rotates in use, the inlet tube 56 rotates with it. The inlet tube 56 is followed by a fluid coupling member 58 (or coolant tube) which receives the fluid from the inlet tube 56. The coupling member 58 is shown in Figure 12. The coupling member 58 serves to connect the rotor caps 52 and 54 and provide a passage for coolant therebetween. The coolant tube 58 has grooves 60 and 62 which, in use, are arranged to receive seals for sealing against fluid leakage. The inlet tube 56 and coupling member 58 may be provided in combination as a unitary component. In combination either as separate components or a unitary component, they may be thought of as the coolant inlet assembly. Furthermore, the coolant inlet assembly together with the caps 52 and 54 may be provided as a unitary component.

The coolant tube 58 has a first end arranged to receive the coolant from the inlet tube 56 and a second end 64 arranged to allow the coolant to continue on its passage through the rotor 24 and motor assembly more generally. At the second end 64 of the coolant tube 58, there are provided openings 66 (Figure 12) through which coolant exits the tube and passes on to the helical paths 50 on the external cylindrical surface of the component 44.

In this example, a central inlet tube 40 is provided. The axis or line of rotation of the rotor lies within the inlet tube 40. This means that when fluid is introduced to the rotor it need not have any rotational velocity already as it is at a substantially central axial position. It is preferable that the inlet to the rotor is axially central (or very close to the central axis) so as to minimise the change in velocity, and hence losses, at the entry. As fluid flows down the tube 40 and then into coupling member 58 and in to radial drillings 68 it acquires rotational velocity as it moves radially further from the central axis of rotation along the drillings 68. By the time the fluid reaches the helical paths 50 it is moving rotationally at the same or substantially the same speed as the rotor.

As seen in Figure 11, the end cap 54 has a socket 110 arranged to receive the second end 64 of the coolant tube 58. The cap 54 also has radial bores or cross drillings 68 which define radial transmission paths from the second end 64 of the coolant tube 58 to the start of the helical paths 50. The radial bores may be straight or curved but in any event serve to provide one or more conduits from the radially inner region of the device to the radially outer region of the device. In one example, where a double helical path is provided two straight radial bores are provided to define a fluid transmission path from the second end 64 of the coolant tube 58 to the start of the helical paths 50. The number of radial bores is preferably selected to correspond to the number of helical paths 50. In some examples however, described in detail below, the number of helical paths is not the same as the number of radial bores or conduits.

The cap 54 also has an axial protrusion 115, seen clearly in Figure 3, arranged to be received within the start of the output shaft 72 from the rotor 24. The drillings 68 within the cap 54 terminate in substantially circular openings 74 which provide defined and fixed paths for the coolant from the coolant tube 58 to the helical paths 50.

Referring to Figure 9, an example of the inner housing 44 is shown. In this example, the housing 44 is cylindrical and has four discrete helical paths defined thereon. The housing 44, when arranged in a rotor, is in a fixed angular relationship with the cap 54 such that the openings 74 from the bore or drillings 68 lead into a respective one of the helical paths 50. It is preferred so as to provide for a uniform coating of the coolant on the outer surface of the inner cylindrical housing 44, that at least four discrete helical paths are used. However it will be appreciated that any appropriate number could be used. In one example, three helical paths are used and the angular arrangement of the bores or drillings 68 within the cap 54 provided accordingly.

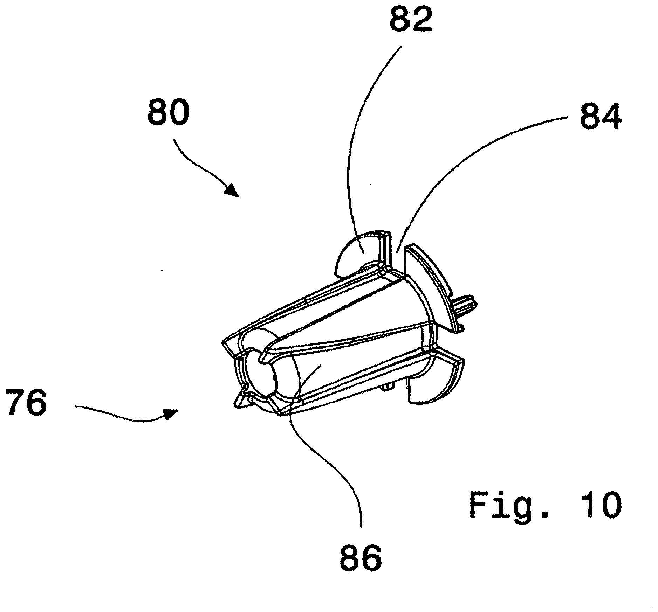

As seen in Figure 3, referring to the first end of the rotor (i.e. the end to which the inlet tube 56 is connected), an impeller 76 (described in detail with reference to Figure 10) is provided. The impeller is provided coupled to the cap 52 and within a bearing journal 78 for the rotor. The impeller 76 is arranged so as to receive the coolant that has passed through the helical paths 50 along the length of the outer cylindrical surface of the inner cylindrical housing 44. The impeller 76 serves to route the coolant back towards the central axis of the rotor and motor assembly and from there onwards to an output for regeneration. It is to be noted that the impeller is a component essential for the invention that prevents relative angular rotation between the fluid and rotor parts when the fluid is encouraged to change its radial displacement. Indeed the conduits and/or guide vanes in the impeller both do this.

The impeller thus serves as a mechanism that ensures that the fluid that changes radius is always rotated at the same (or close to same) rotational velocity (or angular velocity or whirl velocity) as the rotor throughout its change in radius, until very close to the radius of the inlet or outlet (depending on the direction of fluid flowing through it). Indeed, the impeller is a rotating part of the rotor that has conduits for the flow of fluid whereby rotation of the impeller causes rotation of the fluid within it. The fluid does not rotate relative to the impeller, but rotates with the impeller relative to the stator. In other words, the impeller provides a rotating fluid reaction surface and should be construed broadly in this manner. Thus, where there is a radius change for fluid passing through the rotary device, as the fluid passes through the impeller, the impeller can serve to impart or remove rotational energy from the fluid as its radius changes.

Referring to Figure 10, the impeller 76 comprises a frusto-conical housing 80 having radial flanges 82. The radial flanges 82 define openings 84 through which coolant is arranged to flow from the exits from the helical paths 50 and via conduits 94 within cap 52, described in detail below. The impeller is shaped or provided with one or more grooves 86 to provide a controlled passage for the coolant from the conduits 94, onwards to an appropriate exit from the motor assembly. The function of the impeller is important in embodiments since it provides a controlled and effective manner to bring the coolant fluid back to a position close to the axis of rotation of the motor assembly prior to exit from the motor itself. This is important since it serves to maintain or ensure zero relative circumferential velocity (whirl) between the coolant and the rotor. This minimises pressure losses in the fluid.

Indeed, the impeller 76 functions as a means by which the fluid can increase or decrease its rotational velocity as it moves from a radially outer position, e.g. at the output from radial conduit 94, to a radially inner position at the plenum 38 from which the fluid may be removed from the device. In this example, it is to be noted that the radial distance from the axis of rotation of the inlet tube 58, is less than that of the outlet tube 98, such that the annular region 96 (see Figure 4) which defines the outlet from the rotor is radially further from the axis of rotation than the inlet tube. This is preferable as it ensures that the rotor is substantially self-pumping as the overall force on liquid as the rotor rotates pushes it through the rotor. This is analogous to a conventional gravitational syphon, in which fluid can be moved from a position of high potential energy to a position of lower potential energy even if it involves moving at some point along its journey to the position of lower potential to a position of higher potential energy than the input. In other words, once fluid is flowing along the path from the axial inlet tube 56 to the annular outlet 96 it will continue to flow as long as the rotor operates without requiring external pumping.

It will be appreciated that in general by introducing the fluid to the rotor's rotating frame of reference in a central axial direction will ensure that losses are minimised since there is no sudden rotational acceleration required of the fluid. In general, it is desired that the fluid is at all times in the same rotational frame of reference as whatever conduit it is within. So, for example, as the fluid has travelled along and approaches the end of the coupling member 58 (Figure 3) it will have had some rotation imparted to it due to the rotation of the coupling member 58. The coupling between the coupling member 58 and the radial drillings 68 is such that the fluid then moves into the drillings 68 and, from an external viewpoint, accelerates rotationally as it passes along the drilling to the start of the helical paths 50. In other words, the fluid at the start of the drillings 68 (close to the end of the coupling member 58) has little if any tangential velocity. As it passes along the length of the drilling its tangential velocity increases (linearly with radius). However, within the drillings it simply moves along in a straight linear direction. This same effect is achieved at the inlet and outlet of the rotor with the use of the impeller 76.

The housing 80 of the impeller, as mentioned above, is preferred to have a generally angled outer surface such as to define a generally frusto-conical form. This enables a smooth deceleration of the coolant as it moves to the centre line velocity whilst avoiding the imparting of whirl to the fluid. The grooves or vanes 86 in an aspect may be moulded into the body of the impeller and have a desired or appropriate shape. In one example, the vanes are straight. In another example, the vanes are curved such as to provide a gradual change in direction for coolant flowing therethrough. According to the invention, the impeller is a single unitary moulded component with the vanes being an integrated part of it

Referring again to Figure 3, the passage of the coolant through the motor will now be described. It will be assumed that the fluid has already passed through the stator cooling paths described above such that it is now at a position (23 in Figure 2A) ready to enter the rotor. Initially, the fluid enters via conduit 38 into the inlet 88 along the centre line of the motor assembly. The fluid passes axially along the rotor in the direction A until it reaches the end 90 of the coolant inlet assembly or inlet tube 58. The fluid in this example moves generally along the centreline or rotational axis of the rotor, but could depart from this position as long it generally moves from one end of the rotor to the other. For example, the coupling member could include radial deviations such that it is not simply a straight tube along the centre of the rotor. Overall though the movement of the fluid (and the conduit that carries it) from the input to the rotor to the inlets to the helical paths is axial in that it has a component that is along the axial direction of the rotor. Indeed, the helical paths themselves are axial in this example as they have an axial component for the flow of a coolant between a first end of the rotor and a second distal end of the rotor.

At this point, the fluid flows radially outwardly in the bores or drillings 68. The radial passage of the coolant fluid is aided by rotation of the rotor due to centrifugal forces. At 92 the fluid enters the helical paths and travels back along the helical paths to and for the entire length of the inner cylindrical housing 44, until it reaches openings 93 to radial conduits 94 which guide the fluid into impeller 76 and the vanes 86 therein. From here, the fluid passes along an annular or cylindrical path 96 defined by the outer surface of inlet tube 40 and the inner cylindrical surface of the protrusion 48 of the bearing journal. The coolant then passes into plenum 38 such as to be removed from the motor and regenerated.

As the fluid flows along the tortuous or helical paths 50, it is in close proximity to the bases of the magnets or magnet seats 28 and is thus closely thermally coupled thereto. This provides for efficient heat transfer from the magnets into the fluid.

Referring to Figure 4, the cylindrical or annular output path 96 between the outer surface of the inlet tube 56 and the inner surface of cylindrical projection 98 of the rotor bearing journal 78 can be seen.

As shown in Figures 3 and 4, the fluid paths 50 have cross sections which are in these examples square or rectangular. The inner surfaces of the fluid paths 50, (square or rectangular in cross section in these examples) define what may be referred to as "wetted surfaces". In some embodiments, the paths 50 are formed so as to achieve a certain wetted surface, as compared, say, to the inner surface 51 of the magnets 26. In general it is desired to maximise the wetted surfaces of the fluid paths so as to achieve an optimal amount of heat transfer to the fluid from the rotor. The inner surface 51 of the magnets within the rotor will typically define in cross section a cylinder or prism of some cross-section such as a hexagonal prism, (sometimes staggered along the length of the rotor as in Figure 7). As it is typically the inner surface of the magnets through which heat passes from the stator to the fluid paths 50, the wetted surface area of the paths is in some embodiments formed to be of some size or magnitude with respect to the inner surface 51 of the magnets.

Preferably, the total wetted surface area of the fluid paths 50 is at least 35% or more preferably at least 50% of the inner surface area of the magnets or indeed the outer surface area of the wall 28. Preferably, the total wetted surface area is at least 75% of the surface area of the magnets. More preferably, the total wetted surface area is at least 100% of the surface area of the magnets and most preferably, the total wetted surface area is greater than 100%, e.g. at least 125% or 150%, of the inner surface area 51 of the magnets.

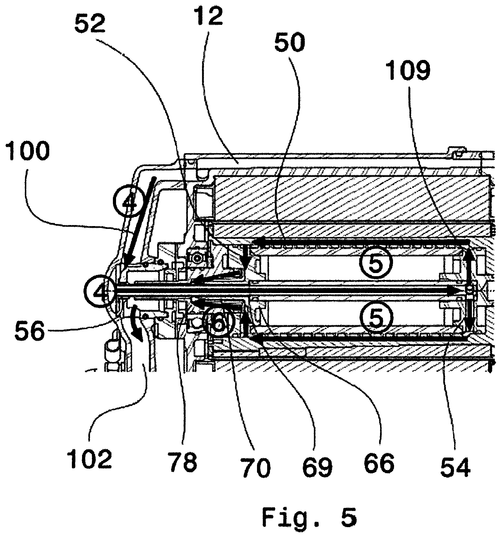

Figure 5 shows a further example of the overall passage for fluid through the motor. As can be seen, initially, the coolant enters the rotor from the serpentine path 12 of the stator 22. The fluid passes into the inlet tube 56 along fluid feed conduit or path 100. From here, the fluid passes through the length of the coolant feed tube assembly, out through the bores or drillings 68 within the cap 54, along the helical paths 50, radially inwardly along guided conduits 52, through the impeller 76 and then through a plenum 104 and out along an output conduit 102.

The materials from which the rotor parts are preferably manufactured include appropriate metals such as steels and Aluminium. For example, the magnet seats 28 and bearing journal 78 are typically made of steel, whereas the plugs 52 and 54 and rotor cylinder 44 are typically made of Aluminium. The impeller is preferably made of a plastic material. The skilled person would be aware of the materials from which other parts of the rotor and motor assembly could be formed.

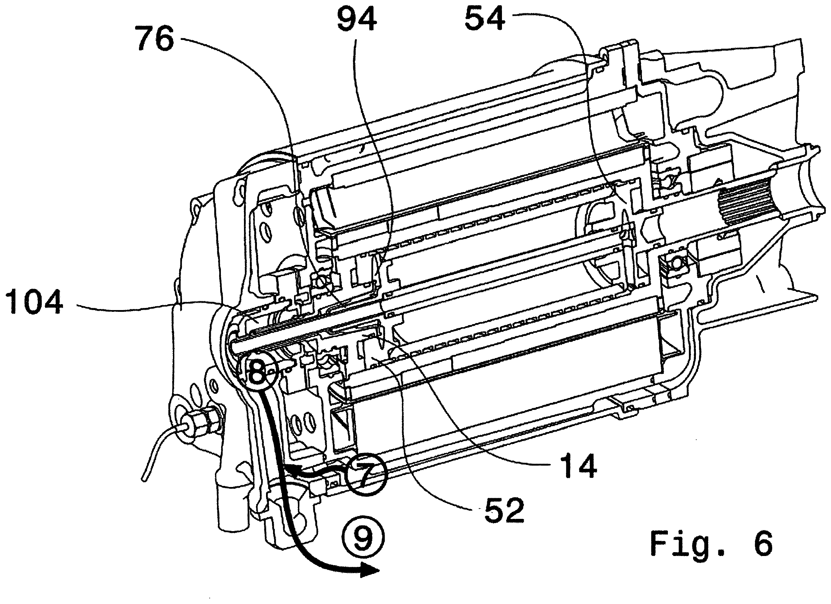

Figure 6 shows in slightly greater detail the output path for the coolant fluid from the rotor and motor assembly. A plenum 104 is provided which serves as a chamber to receive the fluid from the impeller 76 as described above.

Referring now to Figure 7, the rotor 24 will be described in greater detail.

The rotor 24 comprises seats 28 upon which are provided permanent magnets 26 (not shown in Figure 7). The rotor with the seats 28, at any point along the length of rotor, has a hexagonal cross-section. The outer surfaces of the magnets are preferably curved such that once arranged on the seats 28, the outer surface of the rotor is cylindrical, as seen in Figure 4.

It will be appreciated of course that the outer surface of grooves on the inner cylindrical housing 44 is bounded by the inner surface of the seats 28 defining a part of the rotor housing. The arrangement of the magnet on the rotor is staggered longitudinally as can be seen in Figure 7. In other words, the substantially flat seats 28 are planar and stagger along the length of the rotor. Looking at Figure 4 for example it can be seen that each set of magnets that forms a ring on the rotor is angularly offset slightly as compared its upstream and/or downstream neighbours. As mentioned above, this reduces the magnetic-field-induced harmonic distortion in the driving A/C waveform. Indeed, this enables optimal functioning of the rotor within the motor assembly and enables smooth operation thereof in response to the energising of the coils within the stator 22. As the coils within the stator are energised by the application of AC power in a known manner, the interaction between the magnetic field thus generated and the permanent magnet, causes the rotor to rotate.

The output member 34 of the rotor can be seen clearly together with grooves 106. The grooves 106 serve to house one or more seals for the rotor within the motor assembly.

Figure 8 shows the bearing journal for the rotor. The bearing journal 78 includes grooves 108 which, again, are preferably used for one or more seals. The bearing journal is arranged within bearings 30 which serve to control the positioning of the rotor within the motor assembly. Referring to both Figures 3 and 8, the bearing journal will now be described in greater detail. The bearing journal comprises on one axial side, the projection 98 described above which helps to define the outlet path for the coolant from the rotor. On its other axial side there is provided a cylindrical projection 61 which has an internal region 59 of generally frusto-conical form. The internal region and sized and shaped to correspond with the outer surface of the impeller 76 such as to define, together with the grooves 86 in the impeller the paths for the coolant from the radial grooves 94 of the rotor cap 52, described below.

The bearing journal also includes an annular flange 99 having notches 109. The flange and notches provide means by which the bearing journal 78 may be fixedly coupled to the wall 28 of the rotor. Figure 3 shows how the wall 28 may be provided with recesses 55 for receiving fixing elements (not shown) such a screws or rivets. As well as or instead of the notches, appropriately sized holes could be provided in the flange to receive the fixing elements.

Figures 11 and 13 show the rotor caps 52 and 54, respectively. Referring to Figure 11, the rotor cap 54 is shown which would in use be arranged at the second distal end of the rotor, i.e. the end through which fluid leaves the inlet tube 58. The rotor cap 54 includes cross drillings 68 which define the radial conduits through which the fluid passes as it moves from the inlet tube 58 to the helical paths 50. Flats 112 are provided which are preferably used to ensure that the cross drillings 68 align with the openings 66 in the distal end of the inlet tube 58. A circular rim 111 is provided which is sized to engage with the inner cylindrical surface of the cylindrical housing component 44. In addition an annular ring flat 113 is provided which engages the annular end surface 109 (see Figures 6 and 9) of the cylindrical housing component 44. An axial tubular boss 110 is provided which is sized and arranged to receive within it the end of the inlet tube 58, such that coolant that passes along the inlet tube 58 is routed through the openings 66 and onwards into the cross drillings 68. Toroidal grooves 115 and 117 (shown in Figure 3) are provided which serve to reduce the weight and inertia of the rotor cap 54 without affecting its function in other ways.

Next, referring to Figure 13, the rotor cap 52 arranged in use at the first end of the rotor will now be described in detail. As described above, the rotor cap 52 is arranged to support the impeller 76. The cap 52, comprises an axial projection 70 on which is mounted the impeller 76. In addition on the opposite axial surface of the cap 52 there is provided a cylindrical boss 57. The boss 57 has a cylindrical recess 67 sized to receive the first end of the inlet tube 58. The cylindrical recess 67 has an inner shoulder 69 which engages the end axial toroidal surface of the inlet tube 58. The projection 70 is hollow and in combination with the inlet tube 58 engaged with the shoulder 69, provides a substantially continuous conduit for coolant as it passes into the motor.

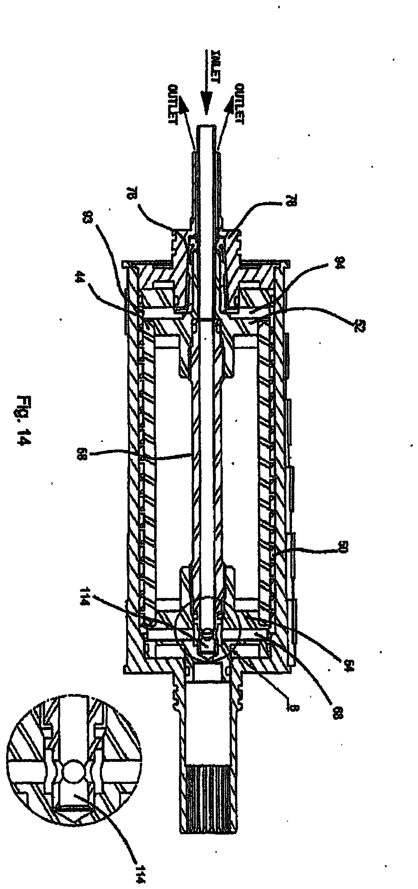

Radial grooves 94 (seen most clearly in Figure 14) provide a route for the coolant received from the helical paths 50 through the cap 52 and onwards into the impeller 76. As seen in Figure13 and 14 circular opening 93 are provided as the inlets to the radial grooves 94. The number of grooves is selected to correspond to the number of helical paths 50 provided on the cylindrical housing component 44. Accordingly in almost all cases the number of radial grooves in the two caps 52 and 54 will be the same so as to correspond to the number of helical paths on the cylindrical housing component 44. The radial grooves are preferably straight grooves of circular cross section arranged in a radial direction. However, in some examples, the grooves could be curved. This is seen in Figure 6 for example which shows curved grooves 94 in the caps 52 and 54. Either or both of the caps 52 and 54 could be provided with straight and/or curved radial grooves, but in all cases the grooves route fluid between a circumferential area of maximum radius and an inner central region of smaller radius.

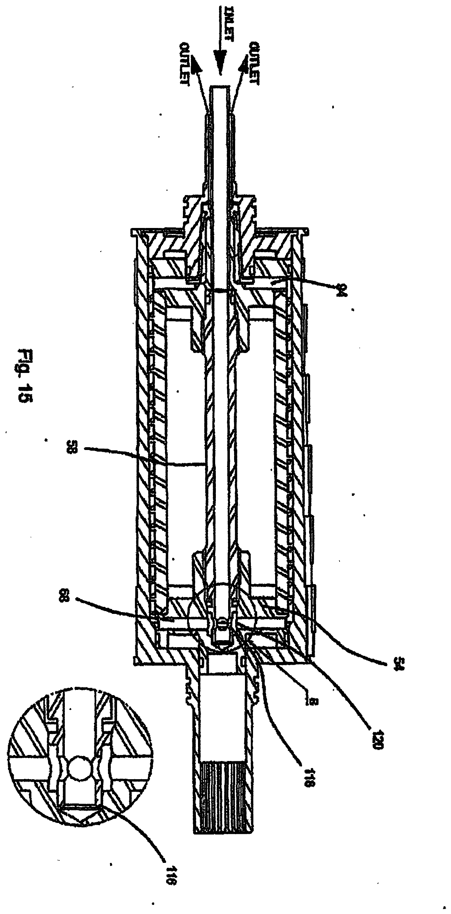

Figures 14 and 15 show further examples of rotors for use in a motor assembly. Figure 14 shows a further example of a rotor for use in a motor assembly. As can be seen, again, a cylindrical housing component 44 is provided with end caps 52 and 54. An impeller 76 is provided between the end cap 52 and the rotor journal bearing 78. In this example, the end cap 54 includes a longitudinal drilling 114 as well as the axial cross drillings 68, described above. Thus, as fluid exits the inlet tube 58 it passes into the drillings within the cap 54 before exiting radially towards the helical paths 50 as described above. In other respects, the operation and function of the rotor will be as described above, with reference to, e.g., Figures 3 and 4. Figures 14 and 15 show clearly the fluid inlets and outlets from the rotor. As can be seen, the fluid outlet is at a larger radius than the fluid thus enabling the rotor to self-pump as a result of the centrifugal forces imparted to the fluid by rotation of the rotor.

Figure 15 shows a further embodiment. In this example, the inlet tube 58 continues into a recess 116 within the cap 54. Openings 118 are provided in the tube 58 to align with the inputs 120 to the cross drillings 68. Preferably, the openings are simple drillings within the inlet tube to allow the coolant fluid to exit radially or from the side of the inlet instead of from the end face. In other respects, the operation and arrangement of the rotor is as described above with reference to other of the figures.

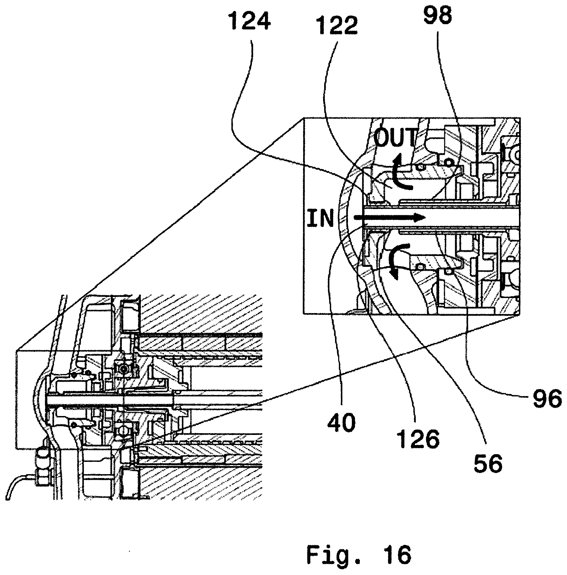

Figure 16 shows a schematic representation of one example of an inlet tube seal that is preferably used at the fluid input to the motor assembly.

As can be seen, the inlet tube 56 is coupled to the plenum housing 122 via an energised face seal 124. A sealing member 126 is provided around the input to the tube 56. The sealing member is preferably formed of a low friction material such as PTFE and is provided in the form of a "top hat". The bore of the PTFE seal 124 is transition fit onto the inlet tube 56. The PTFE seal 124 has a tight fit to the inlet tube and a loose fit to the housing and is designed to seal effectively against the perpendicular face of the stationary housing 122. This permits good sealing despite any "wobble" or run-out in the shaft.

The use of the arrangement described herein enables peak component temperatures within the stator to be limited to approximately 200 degrees Centigrade. In particular examples, the component temperatures of the stator are limited to 207 degrees Centigrade. The rotor cooling, using the disclosed examples, is able to limit the peak component temperatures of the rotor wrap to within the range 160 to 210 degrees Centigrade. Furthermore, due to the use of appropriate seals and configuration of flow paths, together with the impeller described above, the overall motor system pressure drop is limited to 0.5 or 0.4 bar, given an overall flow rate of 15 litres per minute, sufficient to cool a motor of output greater than 100kW and total package volume of 8 litres. The system is able to hold coolant without leaks at greater than 3.5 bar gauge inlet pressure.

The overall pressure of fluid within the outboard extremities of the rotor is dominated by the centrifugal pressure (proportional to the square of rotational speed). In one nonlimiting example, this centrifugal pressure contributes an additional 17 bar when the frequency of rotation is 18,000 rpm and the rotor flow paths are at a radius of 30mm. It is envisaged that in future using the rotor and cooling described herein speeds of up to 25,000rpm could be achieved.

Using the described assembly, the high fluid velocity is attainable which therefore enables good heat transfer to the coolant. This is because a higher flow rate or fluid velocity ensures that the resident time of fluid within the motor is correspondingly small. This in turn means that the fluid is continually replenished with fresh cool fluid and therefore able to receiver a higher amount of heat in unit time as well as increasing the heat transfer coefficient. Accordingly high amounts of cooling can be achieved. In one example, more than 50% of the rotor heat has been removed using the cooling mechanism and methods described herein. Using thermochromic paint it has been determined that the rotor temperature in a motor of 8 litres overall package volume was less than 50 degrees centigrade above the coolant temperature after 10 minutes of motor operation at a power of 110 kW.

The use of the impeller also enables minimal pressure losses which therefore avoids the need for a high pressure coolant pump and complex sealing systems. Importantly, the coolant is close to the source of the heat and therefore provides for good heat transfer therefrom. Furthermore, the use of plural helical paths ensures uniform coverage of hot parts of the rotor, again, ensuring good heat transfer capability.

Last, due to the substantially hollow nature of the rotor assembly, the rotor inertia is minimised.

The disclosed embodiment would typically be used with an ethylene-glycol and water mixture, although other coolants may also be used. All or part of the coolant passes through the rotor cooling system. The coolant enters and leaves the rotor close to the rotor axis, as described above. As mentioned above, the outlet, although close to the rotor axis is at a larger radius than the inlet thus enabling the self-pumping nature of the rotor to be realised. It is preferred that, as in the enclosed embodiments, the coolant enters and leaves the rotor at the same longitudinal or axial end of the rotor. This enables a simple connection to the vehicle transmission at the other end of the rotor. In other words, since no conduits for coolant fluid need to be provided at the distal end of the rotor, the output can lead directly to an output shaft without the need to provide any fluid conduits and or corresponding seals.

A rotating sealing system is provided which prevents fluid entering the rotor cavity in the stator. This prevents fluid sheer friction losses and heat generation. A further rotating sealing system may be provided to separate inlet and outlet fluids mixing. This maximises the effectiveness of the system. It is to be noted that the cooling heat transfer occurs in the zone at significantly larger radius than the inlet and outlets. In other words, since the cooling takes place on the outer cylindrical surface of the inner cylindrical housing 44, this is at a significant radial distance from the axis of the rotor. This ensures good heat transfer (since the heat transfer is at the source of the heat) but also minimum rotor mass and inertia due to the hollow nature of the inner cylindrical housing 44.

As explained above with reference to the impeller, where radius changes are required in the cooling path, the impeller is used to maintain or guarantee zero relative circumferential velocity (whirl) between the coolant and the rotor. This minimises pressure losses in the fluid and thus obviates the need for a high pressure pump to force the coolant through the motor. In addition, a multi-start helical path for the coolant in the heat transfer zone is provided. This ensures high fluid velocity and even and substantially uniform fluid distribution. Furthermore, the component parts of the rotor housing can be made to normal manufacturing tolerances. Last, a sealed air filled cavity is provided under the heat transfer zone which minimises rotor inertia.

Referring again to Figures 3 to 5, in one example the cooling liquid is provided so as to flow in the opposite direction as previously described. In other words, initially, the cooling fluid passes along the annular or cylindrical path 96 defined by the outer surface of inlet tube 40 and the inner cylindrical surface of the protrusion 48 of the bearing journal. From here the fluid flows through the impeller 76 guided by the vanes 86. It then flows on to the radial conduits 94 which guide the fluid to the start of the helical path or paths around the rotor. The fluid passes along the entire length of the inner cylindrical housing 44 and eventually reaches the one or more radial drillings or bores 68 along which it flows radially inwardly to reach the conduit 58, referred to above as the "inlet tube". In this example it may be considered an "outlet tube". The fluid passes along the length of the tube 58 from the distal end towards the proximal end where it can be fed out of the device. Thus the fluid path is substantially opposite to that described above where the fluid enters the assembly via the inlet tube 58. In either usage, it may be that a pump is provided to provide additional or sufficient fluid pressure to drive the fluid in the manner described.

As described above, the radial bores may be straight or curved but in this case serve to provide one or more conduits from the radially outer region of the device to the radially inner region of the device. In one example, where a double helical path is provided two straight radial bores are provided to define a transmission path to the second end 64 of the coolant tube 58 from the end of the helical paths 50. The number of radial bores is preferably selected to correspond to the number of helical paths 50.

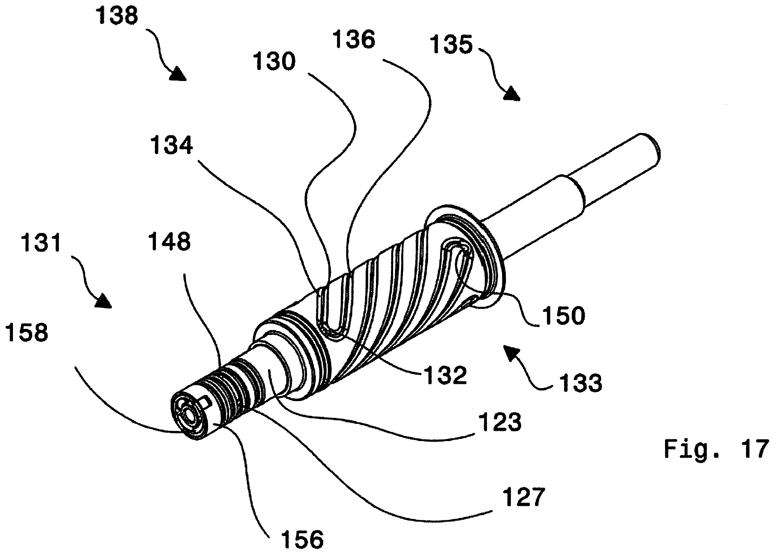

Figure 17 is a schematic representation of an aspect of a rotor 138 for use in a motor.

The rotor is generally similar to that described above with reference to, for example, Figures 3 to 6. The rotor has three general sections, which are the first end section 131, the central section 133 and the second end section 135. The first and section end sections 131 and 135 generally include journal parts for engagement with rotor bearings within a motor or other rotary device. The first and second end sections 131 and 135 include a number of journal surfaces for engagement with bearings within a rotary device such as a motor or generator. For example, first end section 131 comprises generally cylindrical bearing journal 123 for engagement with a bearing (not shown). A number of annular grooves 127 are provided within which seals such as O-rings and the like will be provided to avoid or reduce fluid leakage.

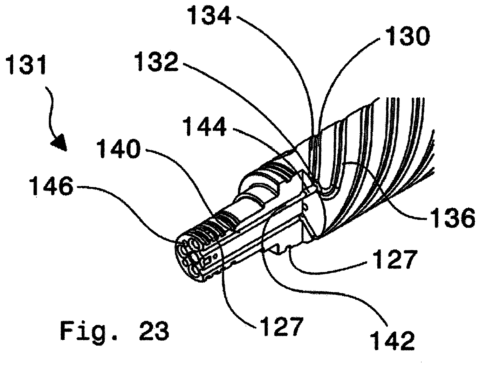

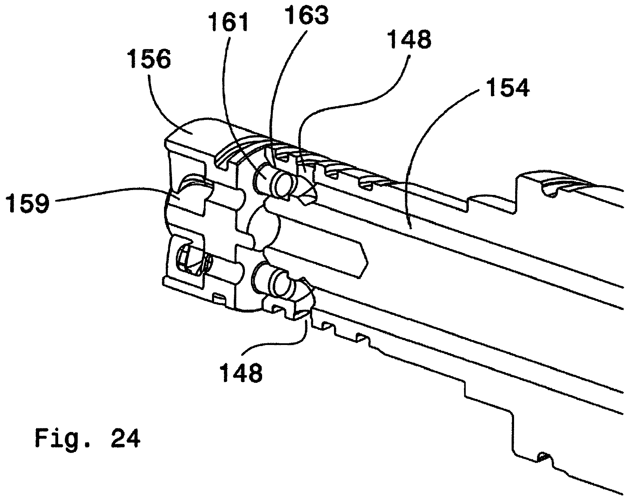

In the example shown, the tortuous paths are defined by double helixes 130. The helixes are "double" in that a single feed inlet 132 feeds two parallel connected paths or branches134 and 136. Liquid enters the double helix via the inlet 132 and passes along both branches 134 and 136 of the helix. By providing a helix with two parallel branches134 and 136, increased surface coverage can be achieved for the rotor, without increasing the number of inlets correspondingly. Thus, for each of the double helixes 130 only a single inlet 132 is required. In addition, increased surface coverage can be achieved without reducing the helix angle which could slow down passage of the liquid along the tortuous paths. Return inlets 150 are provided at the second end of the central section 133 of the rotor, to receive fluid from the helical paths and direct it back through the rotor towards fluid outlets 148 in the first end section 131 described in detail below. Figures 23 and 24 show in more detail a part longitudinal section through the first end section 131 of the rotor. A number of feed conduits 140 are provided through which a cooling liquid is fed into the rotor. The feed conduits 140 comprise parallel axial sections 142 and subsequently radial sections 144 along which the fluid flows so as to reach the inlets 132 to the helical paths 130. Figure 23 shows clearly a single inlet 132 feeding two branches 134 and 136 of helical path 130. Inlets 146 to the axial sections 142 of feed conduits 140 are provided at an axial end of the rotor. In use, once liquid is fed into the rotor it will pass along the feed conduits and then along the helical paths towards the second end section 135 of the rotor. Once there, it passes through return ports and conduits as will now be described with reference, in particular, to Figures 17, 18, 20, 24 and 26.

Referring to Figures 17, 18, 20 and 24, return ports 148 are provided which serve as an outlet for cooling liquid that has passed through the rotor. Cooling liquid that has passed along the helical paths 134 and 136 reaches the end of the central section 133 close to the second end 135 of the rotor and then commences its passage back towards the first end section 131.

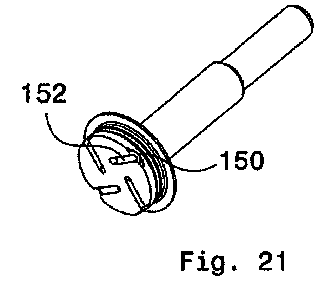

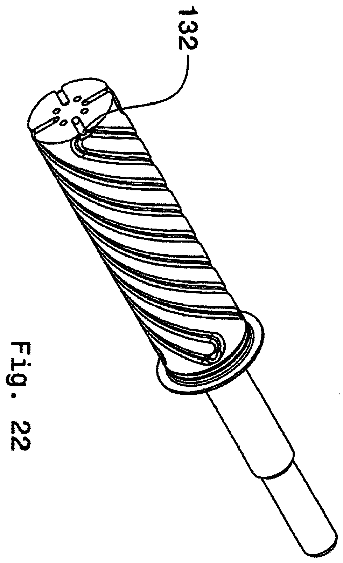

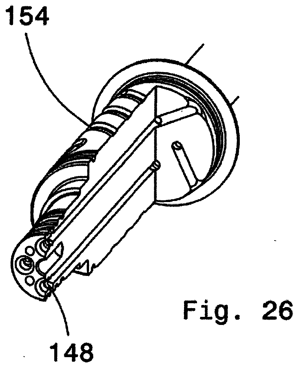

Passage of the fluid through the rotor is thus as follows. Fluid is introduced via the feed conduits140. The fluid then passes along the radial sections 144 (Figures 22 and 23) of the feed conduits140and on to the helical path inlets 132. From here, the fluid passes along the double helical paths 130 until it reaches the distal end of the rotor, i.e. the part of the central section 133 closest to the second end section 135. At this point, the fluid passes into return inlets 150. Radial inlet tubes or drillings 152 (Figure 21) are provided to route fluid from the return inlets 150 into one or more axial return paths 154 (see Figure 26). The radial inlet tubes or drillings are formed within the body of the rotor and again, as with the feed conduits 140, any appropriate number can be provided. Typically the number will be the same as the number of helical paths. However, where double helixes are provided as in the aspect shown in Figure 17, half the number of radial inlet tubes 152 will be provided. The inlet tubes 152 are arranged so as to lead to the inlets of the axial return paths 154. The inlet tubes, in the aspect shown are straight but as with the radial conduits 68 described above, they may be curved. It is simply required that they provide a generally radial path for the liquid to move from the helical paths to the axial return paths 154. Thus, in one aspect they have a generally spiral configuration leading from the inlets 150 to the axial return paths 154.

The fluid then flows generally axially along axial return paths 154 until it reaches return ports or outlet openings 148, seen clearly in Figure 24. Thus, it will be appreciated that the flow of cooling liquid is similar to the embodiment described above with reference to Figures 1 to 16.

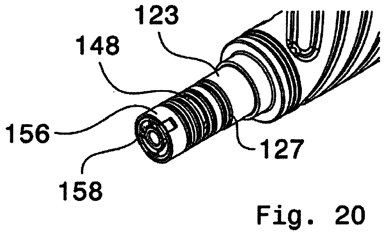

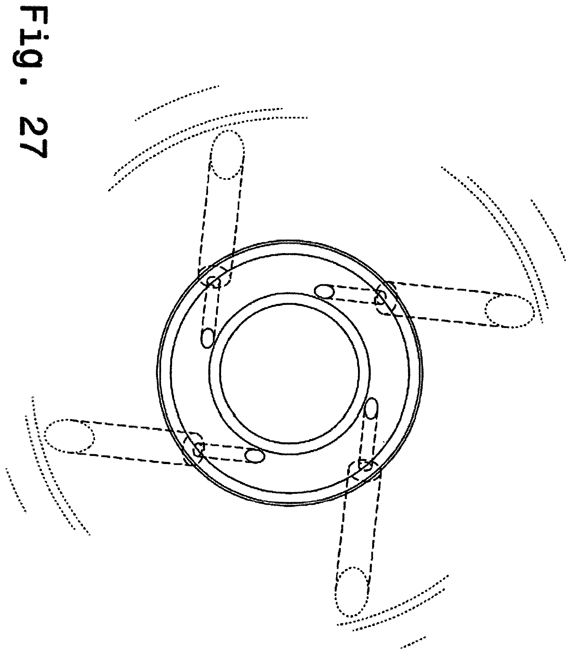

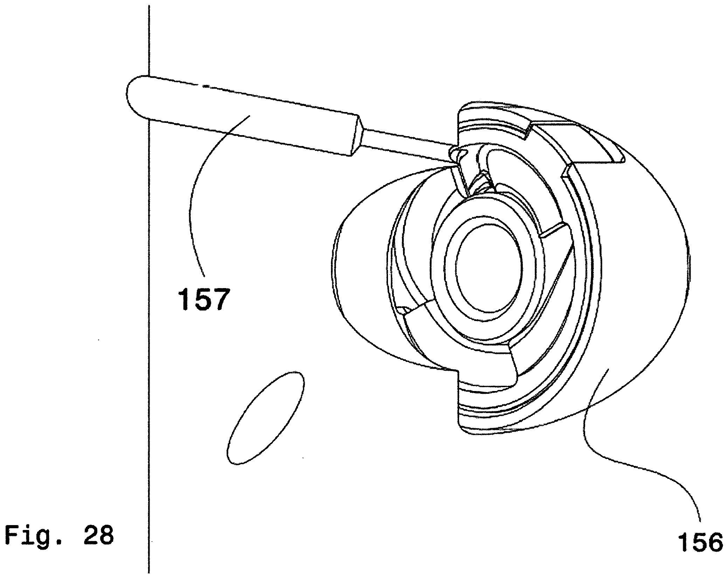

As shown in Figures 17 and 20 in particular, an impeller 156 is provided. The impeller 156 is coupled to the rotor and rotates with it. It serves to provide rotational velocity to the cooling liquid prior to its introduction to the feed conduits 140. It will be appreciated that in contrast to the example of, say, Figure 3, the inlets to the impeller 158 are not on the central axis of rotation of the rotor and, as the impeller will be rotating with the rest of the rotor at high rotational speeds, its inputs will be moving at some significant tangential velocity. So as ensure that fluid that enters is in the same or similar rotational frame of reference, some means such as fluid jets may be provided to impart tangential velocity to the fluid before it enters the impeller. This is described in more detail below with reference to Figures 27 and 28.

The impeller 156 has curved inlet paths 158 shown most clearly in Figure 20. Jets or inlets 157 for jets (see Figure 27) may be provided to supply the liquid to the impeller 156. The jets 157 serve to provide the liquid with some tangential (as well as axial) velocity. The blade angle of the impeller curved surfaces 158 is shallow, thus reducing or minimising losses in fluid pressure whilst still imparting desired rotational or velocity to the liquid as it passes into the rotor.

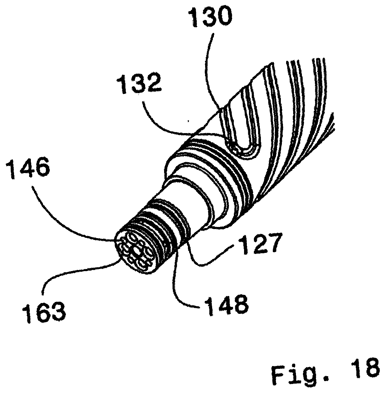

Figure 24 is a schematic representation of an impeller 156 and coupling spigots for a rotor such as that shown in Figure 17, all arranged generally at the first end section 131 of the rotor. The impeller 156 comprises impeller inlet paths 159 through which liquid passes as it enters the rotor. To ensure accurate alignment between the impeller inlet paths 159 and the axial feed conduits 140 (not shown in Figure 24) a plurality of spigots 161 are provided which engage with corresponding openings 163 in the rotor body, seen clearly in Figures 18 and 23. In this aspect 4 spigots 161 are provided. The spigots 161 also form end faces to close off the axial return paths 154. Thus once fluid has reached the end of axial return paths 154 it is forced out of the return ports or outlet openings 148 via engagement with the end faces of the spigots 161.

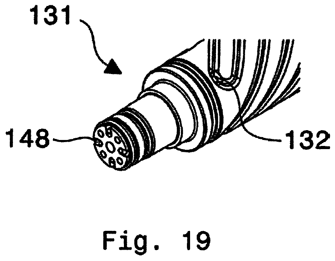

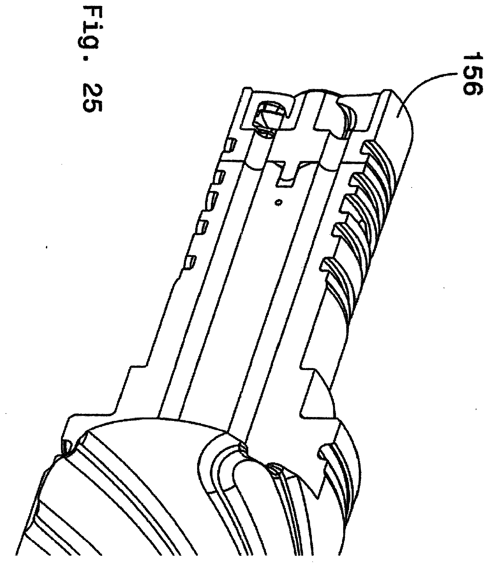

The aspect of Figures 17 to 28 operates in a manner substantially similar to that of the embodiment described above with reference to Figures 1 to 16 and so further description will not be provided. In particular it will be appreciated that various seals and bearings are provided to enable the rotor to operate within a rotary device such as a motor or generator. These aspects will not be described in detail again.

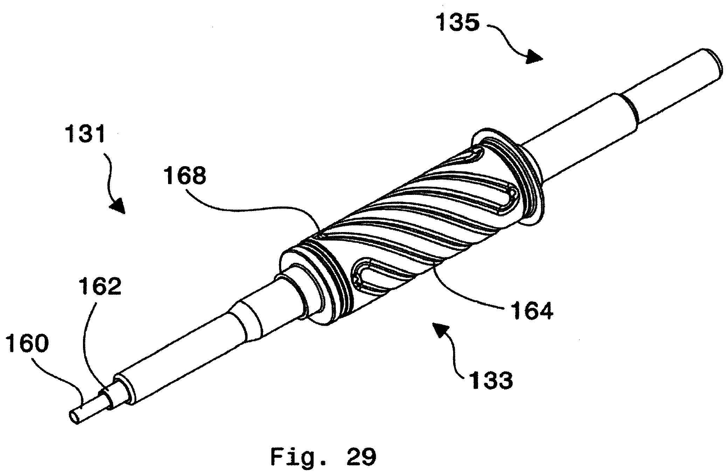

Figures 29 to 37 show a further aspect of the rotor.

The aspect of Figures 29 to 37 is similar to the embodiment of Figures 1 to 17. The inlet and outlet paths, by which fluid is introduced to and removed from the rotor, are substantially parallel and co-axial with the rotor. Referring to Figure 29, a central inlet conduit 160 is provided. The outlet for the fluid that has passed through the rotor 162 is along the annular pathway surrounding the inlet conduit 160. As above, the rotor has three general sections, which are the first end section 131, the central section 133 and the second end section 135. The first and section end sections 131 and 135 generally include journal parts for engagement with rotor bearings within a motor or other rotary device and/or appropriate seals and the like.

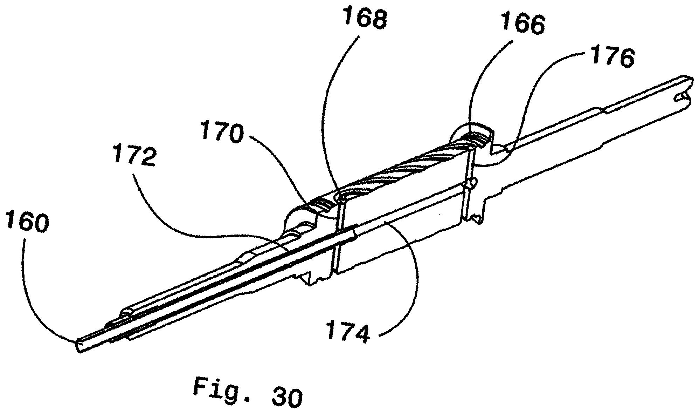

The rotor of Figures 29 to 31 is similar to that of Figure 17 in that double helixes 164 are provided. In this aspect though, the inlet 166 to the helix is at the distal end of the rotor, i.e. at the end closest to the second end section 135. The fluid thus passes along the central conduit 160 until it passes radially outwards to the inlets 166. Then the fluid is forced along the helical paths 164 until it reaches the outlets 168 from the helical paths. Here, the fluid flows along radial conduits 170 and into the annular outlet path 172. Figure 30 shows a section through the shaft assembly in which the central conduit 174 can be seen along which fluid is communicated to radial conduits 176 and subsequently to inlets 166.

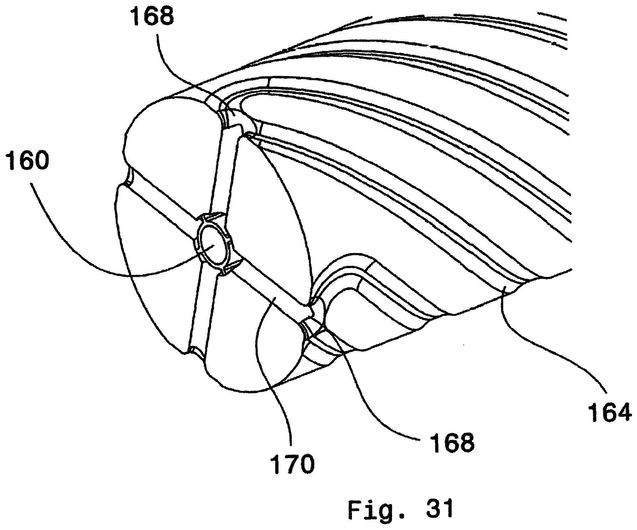

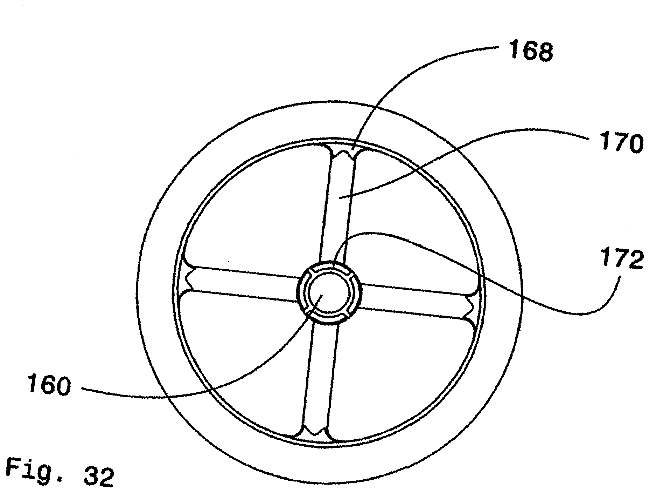

In Figure 31 the helical paths 164 can be seen clearly terminating at outlets 168 from the helical paths leading into the radial conduits 170. Figure 32 is an end-on transverse section through the rotor showing the outlets 168 from the helical paths (also the inlets to the radial conduits 170).

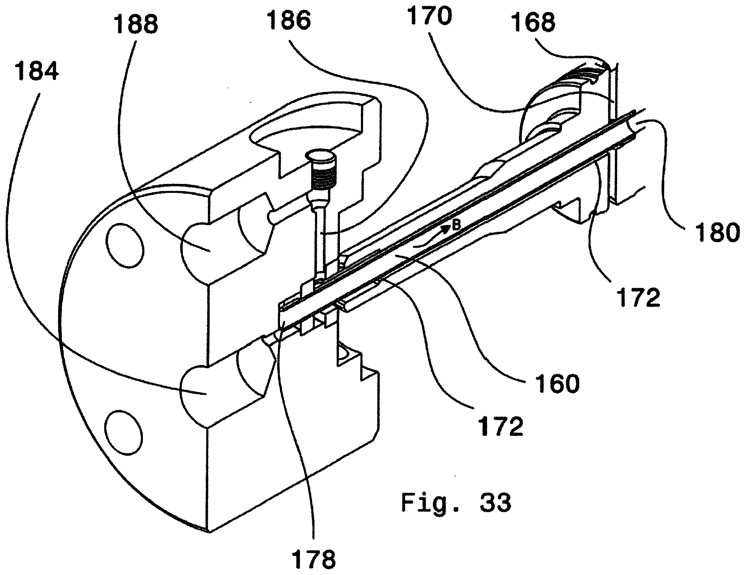

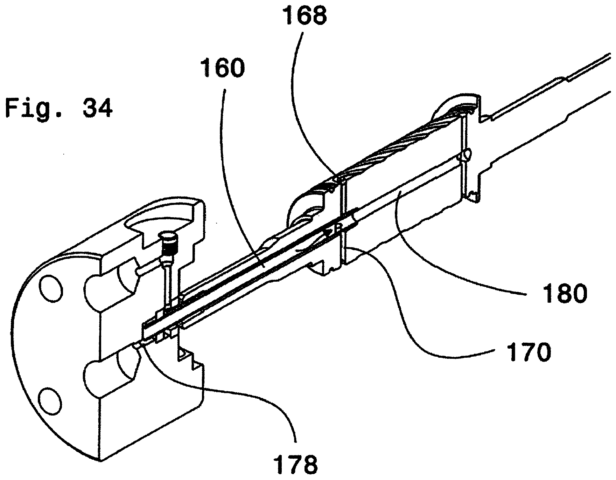

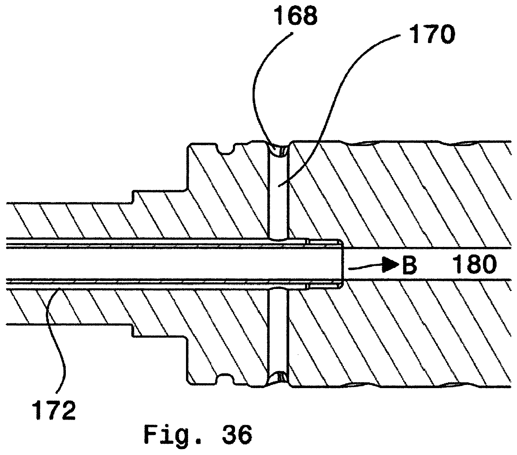

Figure 33 is a schematic representation of a section through the liquid inlet-outlet manifold and Figure 34 is a schematic representation of a section through a rotor including the liquid inlet-outlet manifold of Figure 33. As can be seen, the inlet conduit 160 is able to receive coolant liquid from its open end 178. The liquid flows along inlet conduit 160 in the direction B and into the central conduit 180. Once the liquid has passed along the helical paths along the outer surface of the rotor, it returns along the radial inlet conduits 170 seen most clearly in Figure 36. At this point, the liquid enters the annular outlet conduit and from here is removed from the assembly. As in the example above in, amongst others, Figure 3, the outlet is radially further from the axis of rotation than the fluid inlet to the rotor so that the device is self-pumping and again acts analogously to a gravitational syphon.

The inlet conduit 160, in this aspect, functions as the impeller since liquid fed into it will be imparted with rotational velocity as well as axial velocity. In other words, again the impeller thus serves as a mechanism that ensures fluid that enters it is rotated at the same (or close to same) rotational velocity (or angular velocity or whirl velocity) as the rotor. The inlet conduit or impeller 160 is a rotating part of the rotor that has a central axial conduit for the flow of fluid whereby rotation of the impeller causes rotation of the fluid within it.

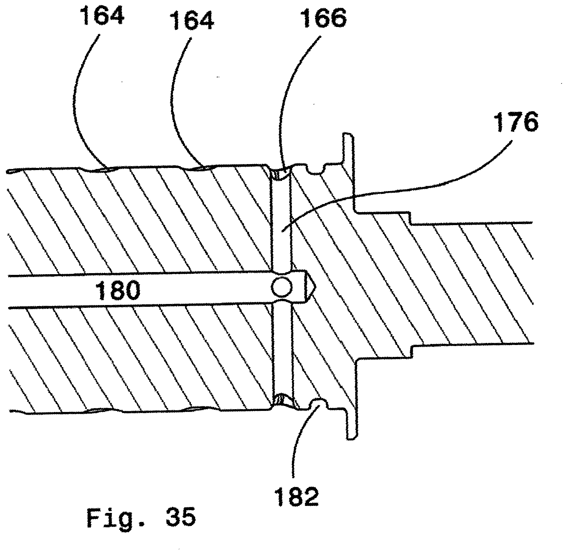

Figure 35 shows a section through the coolant inlet port 166 to the helical paths on the rotor. Coolant received via the central conduit 180 passes along the radial conduits 176, to one of the corresponding inlets 166 and then into the helical paths 164. Various seals and the like may be provided as required to ensure efficient operation of the device. In the aspect of Figure 35, a seal groove 182 is provided which may receive an O-ring. The O-ring, like all other O-rings provided for operation with the rotor may be formed of an appropriate material, e.g. a rubber or elastomeric material.

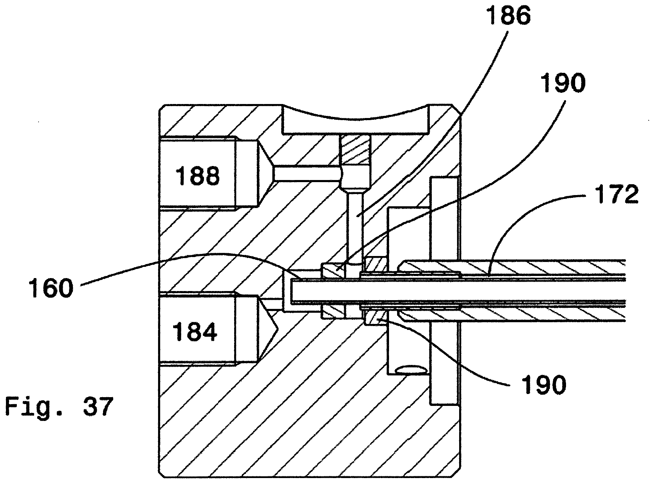

Figures 36 and 37 show schematic cross sections through a part of the shaft assembly showing the liquid or coolant inlet and outlet parts. Initially, coolant is provided via inlet region 184. From there, the coolant flows in through the inlet conduit 160 and onwards through the rotor as described above. On its return, once the fluid has passed along the helical or tortuous paths described above, it passes through ports 168 and along the radial conduits 170 and from there into annular outlet 172. Then the coolant flows into radial outlet conduits 186 and subsequently to outlet 188. Again, as above, various seals 190 are provided to determine fluid flow and stop unwanted leakage.

The scope is defined by the claims.

## Claims

1. A motor, comprising:
a stator (22) for receiving electrical power;
a rotor (24) arranged coaxially within the stator and having one or more magnets (26) arranged thereon,
the rotor (24) comprising a rotor housing (28) having an inner wall (44), the magnets (26) being arranged around the housing, and wherein the rotor (24) also comprises a conduit having an axial component for the flow of a coolant between a first end of the rotor (24) and a second distal end of the rotor (24); the rotor (24) further comprising radial fluid conduits, the radial fluid conduits being fluidly coupled to the conduit having an axial component and arranged in use to receive coolant from or provide coolant to the conduit having an axial component, the inner wall having one or more fluid paths (50) for the flow of coolant, thereby to cool the rotor (24);
at least one fluid impeller (76) arranged at the first end of the rotor (24) and arranged to rotate with the rotor
**characterised in that**
the at least one fluid impeller is arranged to remove and/or maintain rotary movement of fluid leaving the motor,
said one or more fluid paths being tortuous fluid paths,
and **in that** the impeller (76) is a unitary moulded component having guide ribs to guide coolant, and **in that** said impeller is arranged to guide the fluid towards the rotor axis for removal from the motor.

2. A rotary device, comprising:
a stator (22) for receiving or outputting electrical power;
a rotor (24) arranged coaxially within the stator and having one or more magnets (26) arranged thereon,
the rotor (24) comprising a rotor housing (28) having an inner wall (44), the magnets (26) being arranged around the housing, and wherein the rotor also comprises a conduit having an axial component for the flow of a coolant between a first end of the rotor (24) and a second distal end of the rotor; the rotor (24) further comprising radial fluid conduits, the radial fluid conduits being fluidly coupled to the conduit having an axial component and arranged in use to receive coolant from or provide coolant to the conduit having an axial component, the inner wall having one or more fluid paths (50) for the flow of coolant, thereby to cool the rotor (24) at least one fluid impeller (76) arranged at the distal end of the rotor and arranged to rotate with the rotor and impart to and/or maintain rotary movement of fluid entering the rotary device
**characterised in that**
said one or more fluid paths being tortuous fluid paths, and **in that** the impeller (76) is a unitary moulded component having guide ribs to guide coolant, and **in that** said impeller is arranged to guide the fluid radially outwards towards the one or more tortuous fluid paths.

3. A motor according to claim 1 or a rotary device according to claim 2, comprising a fluid inlet to the rotary device respectively the motor and a fluid outlet from the rotary device respectively the motor, wherein the fluid outlet is at a greater radius than the fluid inlet.

4. A motor according to claim 1 or 3, or a rotary device according to claim 2 or 3, in which the coolant enters and leaves the rotor at the same axial end thereof.

5. A motor according to any of claims 1, 3 or 4 or a rotary device according to any of claims 2 to 4, in which the coolant enters and leaves the rotor axially.

6. A motor according to any of claims 1, 3 or 4 or a rotary device according to any of claims 2 to 4, in which the coolant enters the rotor axially and leaves the rotor radially.

7. A motor according to any of claims 1, 3 or 4 or a rotary device according to any of claims 2 to 4, in which the coolant enters the rotor radially and leaves the rotor axially.

8. A motor according to any of claims 1 or 3 to 7 or a rotary device according to any of claims 2 to 7, in which the stator has a labyrinthine path defined therein for the flow of coolant fluid.

9. A motor according to any of claims 1 or 3 to 8 or a rotary device according to any of claims 2 to 8, in which the magnets are staggered or rotationally offset varying with axial displacement along rotor.

10. A motor according to claim 1 or a rotary device according to claim 2, in which the impeller ribs are curved.

11. A motor according to claim 1 or a rotary device according to claim 2, in which the impeller ribs are curved with varying curvature.

12. A motor according to claim 1 or a rotary device according to claim 2, in which the impeller ribs are straight.

## Patentansprüche

1. Motor, Folgendes umfassend:
einen Stator (22) zum Empfangen von elektrischer Leistung;
einen Rotor (24), der innerhalb des Stators koaxial angeordnet ist und einen oder mehrere darauf angeordnete Magneten (26) aufweist,
wobei der Rotor (24) ein Rotorgehäuse (28) umfasst, das eine Innenwand (44) aufweist, wobei die Magnete (26) um das Gehäuse herum angeordnet sind und wobei der Rotor (24) ebenso eine Leitung umfasst, die eine axiale Komponente für die Strömung eines Kühlmittels zwischen einem ersten Ende des Rotors (24) und einem zweiten distalen Ende des Rotors (24) aufweist; wobei der Rotor (24) ferner radiale Fluidleitungen umfasst, wobei die radialen Fluidleitungen mit der Leitung fluidisch gekoppelt sind, die eine axialen Komponente aufweist, und in Verwendung angeordnet sind, um Kühlmittel von der Leitung, die eine axiale Komponente aufweist, zu empfangen oder dieser Leitung Kühlmittel bereitzustellen, wobei die Innenwand einen oder mehrere Fluidwege (50) für den Kühlmittelstrom aufweist, wobei dadurch der Rotor (24) gekühlt wird;
wenigstens ein Fluidlaufrad (76), das an dem ersten Ende des Rotors (24) angeordnet ist und angeordnet ist, um mit dem Rotor zu rotieren,
**dadurch gekennzeichnet, dass**
das wenigstens eine Fluidlaufrad angeordnet ist, um eine Rotationsbewegung von Fluid, das den Motor verlässt, zu entfernen und/oder zu erhalten, wobei der eine oder die mehreren Fluidwege gewundene Fluidwege sind,
und dadurch, dass
das Laufrad (76) eine einheitliche geformte Komponente ist, die Führungsrippen aufweist, um Kühlmittel zu führen, und dadurch, dass das Laufrad angeordnet ist, um das Fluid für eine Entfernung aus dem Motor in Richtung der Rotorachse zu führen.

2. Rotationsvorrichtung, Folgendes umfassend:
einen Stator (22) zum Empfangen oder Ausgeben von elektrischer Leistung;
einen Rotor (24), der innerhalb des Stators koaxial angeordnet ist und einen oder mehrere darauf angeordnete Magneten (26) aufweist,
wobei der Rotor ein Rotorgehäuse (28) umfasst, das eine Innenwand (44) aufweist, wobei die Magnete (26) um das Gehäuse herum angeordnet sind und wobei der Rotor ebenso eine Leitung umfasst, die eine axiale Komponente für die Strömung eines Kühlmittels zwischen einem ersten Ende des Rotors (24) und einem zweiten distalen Ende des Rotors (24) aufweist; wobei der Rotor (24) ferner radiale Fluidleitungen umfasst, wobei die radialen Fluidleitungen mit der Leitung fluidisch gekoppelt sind, die eine axialen Komponente aufweist, und in Verwendung angeordnet sind, um Kühlmittel von der Leitung, die eine axiale Komponente aufweist, zu empfangen oder dieser Leitung Kühlmittel bereitzustellen, wobei die Innenwand einen oder mehrere Fluidwege (50) für den Kühlmittelstrom aufweist, wobei dadurch der Rotor (24) gekühlt wird,
wenigstens ein Fluidlaufrad (76), das an dem distalen Ende des Rotors angeordnet ist und angeordnet ist, um mit dem Rotor zu rotieren und die Rotationsbewegung des Fluids, das in die Rotationsvorrichtung eintritt, zu erteilen und/oder zu erhalten,
**dadurch gekennzeichnet, dass**
der eine oder die mehreren Fluidwege gewundene Fluidwege sind, und dass das Laufrad (76) eine einheitliche geformte Komponente ist, die Führungsrippen aufweist, um das Kühlmittel zu führen, und dass das Laufrad angeordnet ist, um das Fluid radial nach außen in Richtung des einen oder der mehreren gewundenen Fluidwege zu führen.

3. Motor nach Anspruch 1 oder Rotationsvorrichtung nach Anspruch 2, Folgendes umfassend:
einen Fluideinlass zu der Rotationsvorrichtung beziehungsweise dem Motor
und einen Fluidauslass von der Rotationsvorrichtung beziehungsweise dem Motor, wobei der Fluidauslass einen größeren Radius als der Fluideinlass vorweist.

4. Motor nach Anspruch 1 oder 3 oder Rotationsvorrichtung nach Anspruch 2 oder 3, wobei das Kühlmittel an demselben axialen Ende davon in den Rotor eintritt und diesen verlässt.

5. Motor nach einem der Ansprüche 1, 3 oder 4 oder Rotationsvorrichtung nach einem der Ansprüche 2 bis 4, wobei das Kühlmittel axial in den Rotor eintritt und diesen verlässt.

6. Motor nach einem der Ansprüche 1, 3 oder 4 oder Rotationsvorrichtung nach einem der Ansprüche 2 bis 4, wobei das Kühlmittel axial in den Rotor eintritt und den Rotor radial verlässt.

7. Motor nach einem der Ansprüche 1, 3 oder 4 oder Rotationsvorrichtung nach einem der Ansprüche 2 bis 4, wobei das Kühlmittel radial in den Rotor eintritt und den Rotor axial verlässt.

8. Motor nach einem der Ansprüche 1 oder 3 bis 7 oder Rotationsvorrichtung nach einem der Ansprüche 2 bis 7, wobei der Stator einen darin definierten labyrinthartigen Weg für den Kühlmittelfluidstrom aufweist.

9. Motor nach einem der Ansprüche 1 oder 3 bis 8 oder Rotationsvorrichtung nach einem der Ansprüche 2 bis 8, wobei die Magnete mit variierender axialer Verschiebung entlang des Rotors gestaffelt oder rotationsversetzt sind.

10. Motor nach Anspruch 1 oder Rotationsvorrichtung nach Anspruch 2, wobei die Laufradrippen gekrümmt sind.

11. Motor nach Anspruch 1 oder Rotationsvorrichtung nach Anspruch 2, wobei die Laufradrippen mit variierender Krümmung gekrümmt sind.

12. Motor nach Anspruch 1 oder Rotationsvorrichtung nach Anspruch 2, wobei die Laufradrippen gerade sind.

## Revendications

1. Moteur, comprenant :
un stator (22) destiné à recevoir de l'énergie électrique ;
un rotor (24) agencé de manière coaxiale à l'intérieur du stator et ayant un ou plusieurs aimants (26) agencés dessus,
le rotor (24) comprenant un boîtier de rotor (28) ayant une paroi interne (44), les aimants (26) étant agencés autour du boîtier, et dans lequel le rotor (24) comprend également un conduit ayant un composant axial pour l'écoulement d'un liquide de refroidissement entre une première extrémité du rotor (24) et une seconde extrémité distale du rotor (24) ; le rotor (24) comprenant en outre des conduits de fluide radiaux, les conduits de fluide radiaux étant accouplés de manière fluidique au conduit ayant un composant axial et agencés en usage pour recevoir du liquide de refroidissement provenant du conduit ayant un composant axial ou pour fournir du liquide de refroidissement à celui-ci, la paroi interne ayant un ou plusieurs trajets de fluide (50) pour l'écoulement du liquide de refroidissement, afin de refroidir ainsi le rotor (24) ;
au moins une turbine à fluide (76) agencée à la première extrémité du rotor (24) et agencée pour tourner avec le rotor
**caractérisé en ce que**
l'au moins une turbine à fluide est agencée pour éliminer et/ou maintenir un mouvement de rotation du fluide sortant du moteur, lesdits un ou plusieurs trajets de fluide étant des trajets de fluide tortueux, et **en ce que**
la roue (76) est un composant moulé unitaire ayant des nervures de guidage pour guider le liquide de refroidissement, et **en ce que** ladite roue est agencée pour guider le fluide vers l'axe de rotor pour le retrait du moteur.

2. Dispositif rotatif, comprenant :
un stator (22) destiné à recevoir ou délivrer de l'énergie électrique ;
un rotor (24) agencé de manière coaxiale à l'intérieur du stator et ayant un ou plusieurs aimants (26) agencés dessus,
le rotor (24) comprenant un boîtier de rotor (28) ayant une paroi interne (44), les aimants (26) étant agencés autour du boîtier, et dans lequel le rotor comprend également un conduit ayant un composant axial pour l'écoulement d'un liquide de refroidissement entre une première extrémité du rotor (24) et une seconde extrémité distale du rotor ; le rotor (24) comprenant en outre des conduits de fluide radiaux, les conduits de fluide radiaux étant accouplés de manière fluidique au conduit ayant un composant axial et agencés en usage pour recevoir du liquide de refroidissement provenant du conduit ayant un composant axial ou pour fournir du liquide de refroidissement à celui-ci, la paroi interne ayant un ou plusieurs trajets de fluide (50) pour l'écoulement du liquide de refroidissement, afin de refroidir ainsi le rotor (24)
au moins une turbine à fluide (76) agencée à l'extrémité distale du rotor et agencée pour tourner avec le rotor et communiquer et/ou maintenir un mouvement de rotation du fluide entrant dans le dispositif rotatif
**caractérisé en ce que**
lesdits un ou plusieurs trajets de fluide étant des trajets de fluide tortueux, et **en ce que** la roue (76) est un composant moulé unitaire ayant des nervures de guidage pour guider le liquide de refroidissement, et **en ce que** ladite roue est agencée pour guider le fluide de manière radiale vers l'extérieur vers le ou les trajets de fluide tortueux.

3. Moteur selon la revendication 1 ou dispositif rotatif selon la revendication 2, comprenant une entrée de fluide vers le dispositif rotatif, respectivement le moteur, et une sortie de fluide du dispositif rotatif, respectivement le moteur, dans lequel la sortie de fluide est à un plus grand rayon que l'entrée de fluide.

4. Moteur selon la revendication 1 ou 3, ou dispositif rotatif selon la revendication 2 ou 3, dans lequel le liquide de refroidissement entre et sort du rotor par la même extrémité axiale de celui-ci.

5. Moteur selon l'une quelconque des revendications 1, 3 ou 4 ou dispositif rotatif selon l'une quelconque des revendications 2 à 4, dans lequel le liquide de refroidissement entre et sort du rotor de manière axiale.

6. Moteur selon l'une quelconque des revendications 1, 3 ou 4 ou dispositif rotatif selon l'une quelconque des revendications 2 à 4, dans lequel le liquide de refroidissement entre dans le rotor de manière axiale et sort du rotor de manière radiale.

7. Moteur selon l'une quelconque des revendications 1, 3 ou 4 ou dispositif rotatif selon l'une quelconque des revendications 2 à 4, dans lequel le liquide de refroidissement entre de manière radiale dans le rotor et sort du rotor de manièer axiale.

8. Moteur selon l'une quelconque des revendications 1 ou 3 à 7 ou dispositif rotatif selon l'une quelconque des revendications 2 à 7, dans lequel le stator présente un trajet labyrinthique défini à l'intérieur pour l'écoulement du fluide de refroidissement.

9. Moteur selon l'une quelconque des revendications 1 ou 3 à 8 ou dispositif rotatif selon l'une quelconque des revendications 2 à 8, dans lequel les aimants sont décalés en quinconce ou décalés en rotation, variant avec le déplacement axial le long du rotor.

10. Moteur selon la revendication 1 ou dispositif rotatif selon la revendication 2, dans lequel les nervures de la roue sont incurvées.

11. Moteur selon la revendication 1 ou dispositif rotatif selon la revendication 2, dans lequel les nervures de la roue sont incurvées avec une courbure variable.

12. Moteur selon la revendication 1 ou dispositif rotatif selon la revendication 2, dans lequel les nervures de la roue sont rectilignes.
